(19) Europäisches Patentamt
European Patent Office
Office européen des brevets

(11) **EP 2 881 899 B1**

(12) **EUROPÄISCHE PATENTSCHRIFT**

(45) Veröffentlichungstag und Bekanntmachung des Hinweises auf die Patenterteilung:
**12.09.2018 Patentblatt 2018/37**

(51) Int Cl.:
***G06N 5/04*** *(2006.01)*

(21) Anmeldenummer: **14004002.3**

(22) Anmeldetag: **27.11.2014**

(54) **System und Verfahren zur automatisierten Aggregation von Beschreibungen individueller Objektvarianten**

System and method for automated aggregation of descriptions of individual object variants

Système et procédé d'agrégation automatisée de descriptions de variantes d'objectifs individuels

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.12.2013 EP 13005728**

(43) Veröffentlichungstag der Anmeldung:
**10.06.2015 Patentblatt 2015/24**

(73) Patentinhaber: **Deutsche Telekom AG**
**53113 Bonn (DE)**

(72) Erfinder: **Karsten, Reincke**
**60431 Frankfurt (DE)**

(74) Vertreter: **Raible Deissler Lehmann Patentanwälte PartG mbB**
**Senefelderstrasse 26**
**70176 Stuttgart (DE)**

(56) Entgegenhaltungen:
**EP-A2- 0 383 582        WO-A1-02/067151**
**US-A1- 2004 068 485    US-A1- 2009 063 384**
**US-B1- 6 247 128**

• **LI ZHANG ET AL: "Building a commonsense knowledge base for context-awareness inference", CONTROL AND AUTOMATION (ICCA), 2013 10TH IEEE INTERNATIONAL CONFERENCE ON, IEEE, 12. Juni 2013 (2013-06-12), Seiten 430-435, XP032438935, DOI: 10.1109/ICCA.2013.6565173 ISBN: 978-1-4673-4707-5**

**Beschreibung**

Die vorliegende Erfindung bezieht sich auf den Bereich "künstliche Intelligenz", hier insbesondere auf wissensbasierte Expertensysteme und die dafür nötige Erfassung und Einordnung von Wissen in (hierarchisch) strukturierte Systeme.

Stand der Technik

Das Thema Wissensrepräsentation bildet von Anfang an einen Kulminationspunkt für die künstliche Intelligenz. Ausgehend vom Sommerworkshop am Darthmouth College im Jahr 1956, der auch namensgebende Geburt des neuen Fachs "Artificial Intelligence" (Negnevitsky, Michael: Artificial Intelligence. A Guide to Intelligent Systems, 1. Auflage 2002, 3. Auflage 2011) war, wird ihre geschichtliche Entwicklung bis in die 90er Jahre mitunter sogar unter die Überschrift "from the dark areas to the knowledge-based systems" gestellt.

Diese teleologische Ausrichtung manifestiert sich in der Entwicklung weg von umfassenden Erwartungen an die künstliche Intelligenz über eine Phase der Enttäuschung hin zur Entwicklung der Expertensystemtechnologie. Hier wird das extern existierende Wissen sozusagen explizit und manuell in und mit Computerprogrammen erfasst und nutzbar gemacht. Dieser ersten Phase der Konzentration auf wissensbasierte Systeme folgt ein Wiederaufflammen der Technologie der neuronalen Netze mit ihrer Ausrichtung auf den impliziten und automatisierten Wissensaufbau über das Lernen anhand von Beispielen. In der letzten Dekade des 20ten Jahrhunderts, nach dem Erproben der expliziten Wissensrepräsentation und dem automatisierten impliziten Wissenserwerb über maschinelles Lernen und trainierte Netze also habe sich, so die heutige Sichtweise, jedoch ergeben, dass die beiden Techniken kooperieren müssten: Zum einen sei "the process of training of neuronal networks with current technologies [...] slow [...]" und das wiederholte Trainieren solcher Netze "[...] can cause serious problems". Andererseits sollen menschliche Experten ihr Wissen eben nicht nur in und mit Regeln explizieren oder gar ihre Argumentation als solche immer erklären können, was den Aufbau von klassischen Expertensystemen behindere. Die Hoffnung für das ausgehende 20. Jahrhundert und den Anfang des 21. Jahrhunderts sei also, dass beide im Verbund die Nachteile des je anderen ausgleichen, dass etwa "[...] neuronal computing can be used for extracting hidden knowledge in large data sets to obtain rules of expert systems". Bei dieser zentralen Stellung der Wissensrepräsentation als Forschungsgegenstand im Fach KI ist es bis heute geblieben. So wird in neueren Einführungen das Fach selbst sogar über die "wissensbasierten Systeme" und "Expertensysteme" (Zöller-Greer, Peter: Künstliche Intelligenz. Grundlagen und Anwendungen; Mit einer Einführung in die Logik, PROLOG, Expertensysteme, Fuzzy-Systeme, Neuronale Netze und Genetische Algorithmen, 2010) definiert.

Trotz aller Erfolge und Fortschritte im Bereich der Wissensrepräsentation zeichnet sich bei näherer Betrachtung eine über die Jahre ungeklärte Herausforderung ab: In Rückschau kann diese Leerstelle schon im Inhaltsverzeichnis der forschungshistorisch zentralen Aufsatzsammlung "Readings in Knowledge Representation" (Brachmann, Ronald J. u. Hector J. Levesque, San Mateo, Kalifornien, 1985) abgelesen werden, einem Standardwerk, mit dem der damalige Stand der Technik in der Phase der manuellen Wissensrepräsentation anstelle eines durchgehenden "Textbooks" dokumentiert werden sollte: Diskutiert werden erkenntnistheoretische Herausforderungen, spezielle Systeme samt der spezifischen Techniken und Typen der Repräsentationsmethodik wie "structured object representations", "formal logic-based representations" oder "procedural representations and production systems". Was aber allenfalls sehr indirekt thematisiert wird, ist die Frage, wie denn genau das extern existierende Wissen eines Experten in die diskutierten Systeme überführt, d. h. auf dessen Ausdrucksmöglichkeiten abgebildet werden soll.

Später bekommt dieses Problem der Überführung realweltlich vorhandenen Wissens in ein wissensbasiertes Expertensystem eine explizit eigenständige Position und einen eigenen Namen: es wird erfasst als der "process of building intelligent knowledge-based systems" und bezeichnet als das "knowledge engineering" (Negnevitsky, Michael: Artificial Intelligence, 2011). Dieses Repräsentieren im Sinne einer Tätigkeit wird im Kern als ein Auswahlprozess gedeutet. Es gilt, das richtige Tool für die intendierte Wissensdomäne und das damit verbundene Ableitungsproblem zu finden. In diesem Sinne werden die ersten drei Phasen dieses Prozesses als "problem assessment", als "data and knowledge acquisition" und als "developement of a complete system" bezeichnet. Allerdings bleibt auch hier das wirkliche Problem letztlich unanalysiert, nämlich die Frage, wie denn genau das Wissen im Sinne eine Folge von Arbeitsschritten in der Systementwicklung in den Computer überführt wird. Bei der Detailbeschreibung des Prozesses heißt es nämlich schlicht, dass zunächst, also in der Phase 2, die Daten und Wissensbereiche gesammelt und analysiert werden, aufgrund derer dann in Phase 3 zunächst das entsprechende "Tool" zur Wissensrepräsentation ausgewählt und danach die Daten transformiert und das Wissen repräsentiert werden. Was sich hier als übergreifender Prozess des Knowledge Engineerings darstellt, kann seine Allgemeinheit nur dadurch herstellen, dass es die eigentliche Arbeit des Repräsentierens, des Überführens von Wissen in einem nicht weiter analysierten Teilschritt "versteckt", der sich in der Aufforderung manifestiert: "Transform data and represent knowledge".

In der Forschung stellt sich das Repräsentieren im Sinne der Tätigkeit eines Wissensingenieurs als etwas dar, was sich gewissermaßen automatisch in der richtigen Weise ergebe, sofern man nur das richtige Tool zum richtigen Problem bzw. zur Wissensdomäne gewählt hat. Damit bleibt das Repräsentieren als Tätigkeit, also die Überführung realweltlichen Wissens in ein wissenerfassendes und reproduktiv abrufbar zur Verfügung stellendes Repräsentationssystem, scharf ausgedrückt, eine unanalysierte intuitive Kunstfertigkeit, die sich automatisierter mechanisierter Abarbeitung entzieht. Diese Sichtweise, bei der das eigentliche Tun des Wissensingenieurs nicht wirklich thematisiert und lehrbar gemacht wird, herrscht bis heute vor. So sagt etwa ein gern genutztes Lehrbuch (Zöller-Greer: Künstliche Intelligenz, 2010) in seinem Kapitel über Expertensysteme, dass ein Wissensingenieur "in seinem Tun des Wissensengineerings" sich vom Fachmann die Wenn-Dann-Regeln in verbaler Form nennen (lasse) [...], um dann nach diesem informalen "Sammeln" der Regeln und Fakten [...] diese Regeln in Horn-Klauseln umzusetzen und etwa nach Prolog als dem gewählten Tool zu überführen. Was dabei unbeachtet bleibt, dass das Repräsentieren als Tätigkeit, bezogen auf Prolog oder Lisp, als Repräsentationssysteme auch gerade Entscheidungen über Datenstrukturen einschließt, die ihrerseits "Strukturen der Wirklichkeit " erfassen und sich mitnichten einfach so ergeben. Der Prozess des Überführens von realweltlichem Wissen in die repräsentierenden Systeme ist mit der Beschreibung "Fakten und Regeln vom Experten erfragen und abbilden" schlicht unterbestimmt.

Diese aktuelle Art der wissenschaftlichen Sichtweise findet sich immer wieder. Auch in dem aktuellen "Handbook of Knowledge Representation" werden vornehmlich allgemeine Methoden es Bereichs "Knowledge Representation and Reasoning" und spezielle Repräsentationstechniken, wie "Description Logics", "Constraint Programming" oder "Conceptual Graphs" etc. verhandelt (Harmelen, Frank van, Vladimir Lifschitz, Bruce Porter: Handbook of Knowledge Representation, 2008). Erst ganz zum Schluss wird dann auf wenigen Seiten das Knowledge Engineering als ein Tun diskutiert, ohne dass dabei die Überführung von Wissen in Wissensrepräsentationssysteme selbst systematisiert würde. Und selbst in einem sehr jungen Sammlungsband (Mehrotra, S. C. et al.: Knowledge Engineering, 2011) zum Thema Knowledge Engineering findet sich kein Aufsatz, der explizit der Frage nachgeht, wie denn Wissen systematisch und systematisiert in wissensbasierte Computersysteme überführt werden soll. Was es gibt, sind Berichte über das, was getan worden ist; eine konkretere Anleitung, wie man dazu vorgeht, gibt es nicht.

Neben der künstlichen Intelligenz als Fach gibt es noch die Informationswissenschaft, die den Begriff der Wissensrepräsentation ebenfalls beansprucht: Als Disziplin beschäftigt sich die Informationswissenschaft in zentraler Weise mit dem Suchen und Finden relevanten Wissens, sie [...] untersucht das Auswerten, Bereitstellen, Suchen und Finden von relevantem (vorwiegend digital vorliegendem) Wissen [...]" und stellt "Information-Retrieval-Systeme" in ihren Mittelpunkt, die [...] entweder mit sogenannten "Boolschen Systemen" oder mit natürlichsprachigen Systemen (arbeiten), die ihrerseits auf Resultaten von Informationslinguistik und - statistik aufbauen (Stock, Wolfgang G.: Information Retrieval; Informationen suchen und finden, 2007). Aus dieser Kennzeichnung ergibt sich, dass das Wissen bei der Informationswissenschaft initial und primär natürlichsprachlich vorliegt, unter Umständen durch geeignete Metadaten der Klassifizierung angereichet und dass dann über geeignete Techniken relevante Textstellen wiedergefunden werden sollen. Die Informationswissenschaft zeigt sich damit als eine generalisierte Bibliothekswissenschaft. Passend zu diesem Konzept, beschäftigt sich die Wissensrepräsentation im Rahmen dieses Forschungsfelds dann mit der geeigneten Anreicherung der sprachlichen Primärdaten über Auswertung von Begriffsordnungen (Stock, Wolfgang G. u. Mechthild Stock: Wissensrepräsentation; Informationen auswerten und bereitstellen, 2008) Klassifikationen, Thesauri, Ontologien und bibliographische Metadaten etc. Trotz inhaltlicher Überschneidungen und wechselseitiger Befruchtung mit der KI darf konstitiert werden, dass das Repräsentieren von Wissen durch Wissensingenieure in eine besondere Art der Primärdokumente hinein, im Rahmen der Informationswissenschaft nicht wirklich behandelt wird. Was (noch) nicht (genuiner) Gegenstand dieses Fachs ist, ist der Repräsentationsprozess als solcher und die Arbeit von Wissensingenieuren. Konsequenterweise kann die Informationswissenschaft noch nicht direkt zur Beantwortung der Frage beitragen, wie denn genau ein Wissensingenieur vorgehen müsse.

Damit stellt sich der Stand der Forschung so dar:

Wir kennen die Architektur von wissensbasierten Expertensystemen. Sie bestehen aus einer Wissensbasis, mit der das Domänenwissen maschinenlesbar zur Verfügung gestellt wird, der Inferenzmaschine zur Ableitung von Einzelfallwissen (Lösungen) aus der Gesamtheit des repräsentierten Wissens, einer Dialogkomponente, die es "[...] dem Anwender erlaubt, ohne Kenntnis der im Hintergrund benutzten deskriptiven Sprachen mit dem System zu arbeiten", aus einer "Tracekomponente" zur Explikation von regelbasierten automatisierten Entscheidungen und aus einer Wissensveränderungskomponente zur Integration neuer Regeln und Fakten in die Wissensbasis (Zöller-Greer: Künstliche Intelligenz, 2010).

Was es jedoch nicht gibt, ist ein domänenübergreifend anwendbarer Repräsentationsprozess, der im Sinne eines Rezepts oder einer Anleitung von Wissensingenieuren bei unterschiedlichen Wissensbereichen abgearbeitet werden kann. Was es nicht gibt, ist eine dazu passende domänenübergreifend anwendbare Repräsentationsmaschine. Genau dies ist aus geschäftlicher Sicht aber notwendig, damit wissensbasierte Systeme in der Geschäftswelt erfolgreich integriert werden können. Solange bei jeder Repräsentation sozusagen von Null an das richtige Tool und die richtige Repräsentationsmethodik neu gefunden werden muss und solange mit jeder Wissenserweiterung oder Verlagerung des Domänenfokus die Gefahr einhergeht, bestehende Lösungen verwerfen zu müssen, bleibt diese Arbeit ein Kostenfaktor, der einer vielfachen Verwendung wissensbasierter Systeme in der Praxis entgegensteht.

Was es als Lösung dafür bedarf, ist ein domänenübergreifender einheitlicher Prozess, der auf verschiedene heterogene Wissensdomänen in derselben Weise zugreift und dem bei seiner Umsetzung eine auf diese einheitliche Zugriffsweise ausgelegte Wissensrepräsentationsmaschine (Wissensbasis + Inferenzmaschine) zur Seite steht.

Hier setzt der im Folgenden ausgeführte Erfindungskomplex an: Er liefert (a) einen domänenübergreifenden Repräsentationsprozess, der eine domänenübergreifende Sichtweise voraussetzt und auf der Basis bis hinunter in eine Folge von Arbeitsschritten formuliert werden kann. Er liefert (b) eine domänenübergreifende Repräsentationsmethode und eine darauf ausgelegte Repräsentations- und Ableitungsmaschine. Er liefert außerdem eine (kooperierende) Maschine zur Ermittlung der empirisch relevanten Generalisierung (Begriffe), die dem Wissensingenieur die zeitraubende Arbeit abnimmt, diese Generalisierungen manuell und willkürlich zu erfinden. Schließlich enthält dieser Erfindungskomplex eine generalisierte domänenübergreifende Dialogkomponente zur Aggregation von Produktbeschreibungen.

Stand der Technik: Problem

Die internationale Patentanmeldung WO 1996002882 beschreibt ein Expertensystem (16) mit einem a priori Netzmittel, einem Fall Netzmittel und einem Verarbeitungsmittel zur Einordung der Daten beschrieben, das eine Steuerlogik verwendet, die auf einer Ausbreitungs-Aktivierung und auf Graphen als Darstellung von Kenntnissen beruht, um eine gültige Konfiguration von verbundenen Komponenten zu erzeugen, wobei das Expertensystem folgendes umfaßt:

- ein a priori Netzmittel (24) zum Speichern von Komponenten-Definitionen, die deklarativ durch einen Konfigurator-Entwickler (10) festgelegt werden, worin die Komponenten-Definitionen und die implizierten Erfordernisse ihrer Verwendung als erste Knoten in einem ersten zweiteiligen Ausbreitungs-Aktivierungs-Graph dargestellt werden;
- ein Fall-Netzmittel (34) zum Speichern von im a priori Netzmittel (24) definierten Fall-Komponenten, die interaktiv von einem Konfigurator-Anwender (26) ausgewählt worden sind, worin die Fälle und die Verbindungen zwischen den Fällen als zweite Knoten in einem zweiten zweiteiligen Graph dargestellt werden;
- und ein Verarbeitungsmittel (32), das an das a priori Netzmittel (24) und das Fall-Netzmittel (34) gekoppelt wird, um Anforderungen vom Konfigurator-Anwender (26) anzunehmen, damit die auswählten Komponenten konfiguriert werden, um die Konfigurator-Anwender-Anforderungen mit den Komponenten-Definitionen in Übereinstimmung zu bringen, um die logischen Implikationen der Konfigurator-Anwender-Anforderungen automatisch durch so viele erste Knoten des ersten zweiteiligen Ausbreitungs-Aktivierung-Graphs und durch zweite Knoten des zweiten zweiteiligen Graphs auszubreiten, wie sie erforderlich sind, damit ein vollständiger Satz von geschalteten Komponenten aufgebaut wird, die die Konfigurator-Anwender-Anforderungen erfüllen, indem ausgewählte Fälle der ausgewählten Komponenten nur dann erzeugt und verbunden werden, wenn die Erzeugung und Verbindung der ausgewählten Fälle auf der Grundlage der Komponenten-Definitionen im a priori Mittel (24) und in den vorangegangenen Konfigurator-Anwender-Anforderungen gültig sind, und um dem Konfigurator-Anwender (26) die Konfiguration zu melden, die sich aus den Konfigurator-Anwender-Anforderungen ergibt.

Man erkennt so sofort, dass sich das Desiderat auf Seiten der wissenschaftlichen Bearbeitung auch auf der patentrechtlichen Seite wiederfindet:
Nachteilig bei dem Stand der Technik ist, dass trotz aller genaueren Spezifikation offenbleibt, wie die Abbildung des Wissens um eine konkrete Domäne auf dieses Lösungspattern erfolgt.

Auch die Umsetzung dieser Abbildung ist nicht automatisiert und die Definition neuer Domänen bleibt den Wissensingenieuren überlassen. Die Wissensrepräsentation als Verfahren ist nicht generalisiert.

Technische Lösung

Die vorliegende Erfindung überwindet die Nachteile des Stands der Technik gemäß den angehängten Ansprüchen.

Die Maschine und das Verfahren verfolgt den Ansatz, den Wissensrepräsentationprozess, die Struktur der kontextsensitiven Ableitung von Wissensentitäten und die Interaktion mit dem auswählenden Kunden so weit unabhängig von dem je konkreten Wissensgebiet, also domänenübergreifend zu vereinheitlichen, dass der Aufwand zur Repräsentation von Domänenwissen trotz aller Heterogenität der Domänen minimiert und die Interaktion zur Ableitung der einzelnen, personalisierten Produkte, Objekte oder Wissensentitäten trotz aller Verschiedenheit der Domänen wiederverwertbar gemacht wird, und zwar ohne für diese Synergien domänenverfälschende Vereinfachungen in Kauf nehmen zu müssen. Insbesondere zeichnet sich die Erfindung durch die folgenden Aspekte aus:

- Domänenunabhängige, weil zwecksystemisch operierende, wissensbasierte Maschine zur automatisierten Aggregation domänenadäquater kundenspezifischer personalisierter Produkt- und Objektbeschreibungen;

- Verfahren zur Generierung und Darstellung empirisch optimaler Taxonomien;
- Verfahren zur domänenunabhängigen zwecksystemischen Wissensrepräsentation;
- einheitliches, visuell-haptisches Verfahren zur dialogischen Aggregation personalisierter Produktspezifikationen.

Spezifikation

Die Erfindung stellt eine wissensbasierte Maschine bereit, über die sich ein Kunde (Nutzer) die Beschreibung eines auf seine Wünsche ausgelegten Produkts (Objekts) automatisiert und domänenadequat zusammenstellt und die so erzeugte Beschreibung an einen beliebigen nachgelagerten Produktions-(Verwertungs-)prozess weiterreichen lassen kann. Mithin geht es hier um ein Knowledge Entity Delivery System, um eine KEDS-Maschine.

Als wissensbasierte Maschine bringt diese selbst das Wissen um den je evaluierten Weltausschnitt in die Aggregation einer personalisierten Produktspezifikation ein, so dass der Nutzer vorkenntnislos, ganz nach Belieben, Komponenten und Eigenschaften des zu beschreibenden Objekts kombinieren kann. Zentrale Aufgabe der Maschine in diesem Prozess der sukzessiven Aggregation von domänenadäquaten Objektbeschreibungen ist es, die automatisierte Einhaltung, insbesondere der kontextuellen Kombinationsregeln, einer Domäne zu gewährleisten.

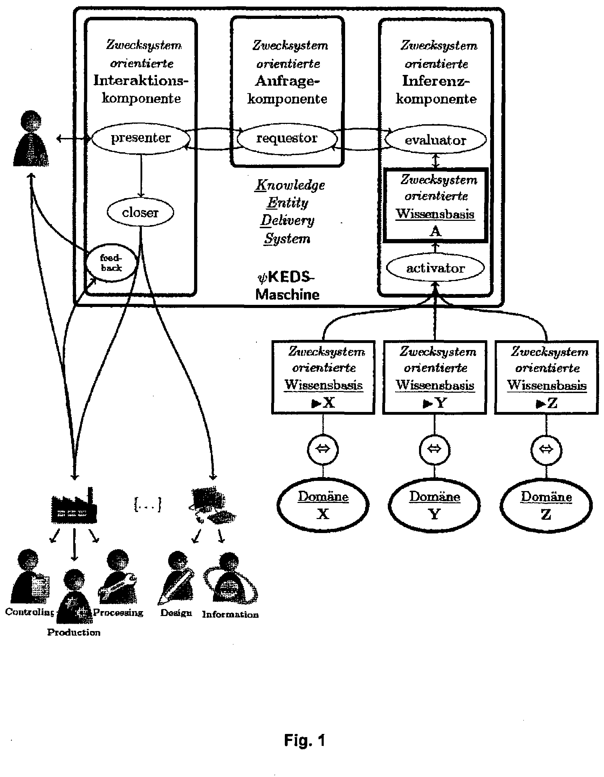

Neu an dieser Maschine ist, dass all ihre Komponenten, die ausgewerteten Wissensbasen, der darauf aufsetzende Auswertungsprozess, die Interaktion mit dem auswählenden Nutzer, auf das neue, übergreifende Prinzip der "zwecksystemischen Repräsentation" ausgelegt sind. Damit ermöglicht es diese Maschine, selbst stark heterogene Domänen mit demselben Verfahren zu repräsentieren, aus den gewonnenen Wissensbasen gleich strukturierte Wissensentitäten mittels gleich strukturierter Interaktionskomponenten abzuleiten und diese Wissensentitäten in demselben Format als empirisch adäquate Objektbeschreibungen an verschiedene nachgelagerte Verwertungsprozesse zu übergeben. Insofern geht es hier um eine zwecksystemische KEDS-Maschine, kurz: eine $\psi$KEDS- Maschine, wie sie in Figur 1 exemplarisch und schematisch dargestellt ist.

Die Interaktionskomponente

Die Interaktionskomponente kann jede beliebige, in ein Netz eingebundene, rückkanalfähige Darstellungsmaschine sein, die in und mit dem ihm gemäßen Medium mindestens in der Lage ist,

- von nachgelagerten Komponenten empfangene, gelabelte, verschachtelte Listen oder Graphen zu präsentieren,
- einen speziellen Bereich für Entscheidungsoptionen bereitzustellen,
- die Entscheidung eines Nutzers in dieser Sache entgegenzunehmen und
- diese Entscheidung an nachgelagerte Verarbeitungsstufen weiterzureichen.

"Netz" beziehe sich hier allgemein auf einen Verbund von Wegen und Mitteln zur Nachrichtenübertragung. Das Wort "Netz" darf der Einfachheit halber im Folgenden gern als "das Internet" interpretiert werden, gemeint sind aber auch andere Übertragungssysteme wie Morsen per Funk etc.

Im einfachsten Fall handelt es sich bei der Interaktionskomponente um einen gängigen netzfähigen Computer mit Bildschirm, Maus und Tastatur. Bei komplexeren Ansätzen können es ebenso gut akustisch orientierte Präsentations- und Input-Geräte, wie taktil operierende Systeme, sein.

Unabhängig von dieser Ausformung präsentiert die Interaktionskomponente dem spezifizierenden Nutzer zuerst den je aktuellen Stand der Beschreibung der zu aggregierenden Wissensentität und den anstehenden Entscheidungsbedarf. Danach nimmt sie die Entscheidung des Nutzers entgegen und reicht diese an die Anfragekomponente weiter. Den Aggregationsprozess initialisiert die Interaktionskomponente auf Wunsch des Nutzers, indem sie über die Anfragekomponente eine initiale Entscheidungsliste von der Inferenzkomponente anfordert.

Die Anfragekomponente

Die Anfragekomponente ist ein ins Netz eingebundener Computer mit einem Softwarestack, der die beiden folgenden Aufgaben erfüllt:

- Einerseits nimmt sie getroffene Entscheidungen in dem von der Interaktionskomponente vorgegebenen Format von dieser entgegen, übersetzt sie in das zwecksystemische Kommunikationsformat und reicht die Resultate an die Inferenzkomponente weiter.
- Andererseits nimmt sie von der Inferenzkomponente die mehr oder minder vollständig aggregierten Beschreibungen von Wissensentitäten im zweck-systemischen Kommunikationsformat samt der nächsten je zu treffenden Entscheidung entgegen, überführt diese in das von der Interaktionskomponente vorgegebene Format und reicht das Ergebnis an diese weiter.

Die Inferenzkomponente

Die Inferenzkomponente ist ein ins Netz eingebundener Computer mit einem Softwarestack, der die folgenden Aufgaben erfüllt:

- Zwecks Berücksichtigung in der laufenden Aggregation nimmt die Inferenzkomponente Entscheidungen bzgl. einer spezifischen Beschreibungsaufgabe entgegen, die ihr von der Anfragekomponente im zwecksystemischen Kommunikationsformat übermittelt wird.
- Bei initialen Anfragen aktiviert sie die entsprechende Wissensbasis als Bezugsrahmen.
- Nach Erhalt einer Entscheidung trägt sie das Ergebnis als neues Element in die je aktuelle Beschreibung der zu aggregierenden Wissensentität ein.
- Auf der Basis dieser (erhaltenen) Entscheidung aktiviert sie alle im Kontext dieser neuen Spezifikation relevant gewordenen Regeln.
- Auf Basis der (erhaltenen) Entscheidung grenzt sie danach über die logische Auswertung der bereits aktivierten Regeln weitere Entscheidungsbereiche ein.
- Entstehen dabei automatisiert gewonnene, weil mangels weiterer Varianten implizit gültige Entscheidungskonsequenzen, verfährt sie mit diesen mittelbar gewonnenen Entscheidungen so, wie sie die von außen eingegangene, auslösende Entscheidung behandelt hat. Dieses führt sie iterativ solange durch, bis keine weitere Entscheidung mehr ohne weitere Spezifikation von außen getroffen werden kann.
- Nach Bearbeitung der von außen vorgegebenen Entscheidung und aller sich daraus ergebenden inneren Konsequenzen reicht die Inferenzkomponente den so erzeugten neuen Stand einer Beschreibung der Wissensentität im zwecksystemischen Kommunikationsformat an die Anfragekomponente weiter:

    - Stehen keine weiteren Entscheidungen an, ist die Beschreibung vollständig und die Aggregation abgeschlossen.
    - Bleiben Entscheidungsfelder offen, legt die Inferenzkomponente über die Anfragekomponente und die Interaktionskomponente die Details der nächsten zu treffenden Entscheidung dem spezifizierten Nutzer zur Beantwortung vor.
    - Hat sich während des letzten Aggregationsschritts herausgestellt, dass die bisherigen äußeren Vorgaben zusammen unerfüllbar sind, übergibt die Inferenzkomponente an die Anfragekomponente eine Liste der Entscheidungen, deren jeweilige Rücknahme den Konflikt auflösen und eine weitere Aggregation ermöglichen würde.

- Auf spezielle Nachfrage legt die Inferenzkomponente die wirksam gewordenen Regeln und die sie aktivierenden Fakten als Begründung für eine Entscheidung vor.

Die zwecksystembasierte Repräsentation im Besonderen:
Global gesehen handelt es sich bei der hier vorgestellten Maschine zur automatisierten Aggregation personalisierter Objekt- resp. Produktbeschreibungen um eine verteilt operierende Frage-Antwort-Maschine mit deklarativer Wissensbasis und logisch basierter Deduktionskomponente. Schon insofern grenzt sie sich von üblichen funktionalen Repräsentationen oder simplen Auflistungen aller Domänenobjekte ab.

Spezifisch ist für diese Maschine jedoch, dass all ihre Teile auf die Prinzipien einer zwecksystemischen Repräsentation ausgerichtet sind:
Das Prinzip der durchgehenden $\vee(\wedge\vee)^*$-Repräsentation:

- Es gibt keine Teil-Ganzes-Relation an sich. Stattdessen wird jede Komponente eines Domänenobjekts als etwas repräsentiert, das in dem Objekt als Ganzes einen für dieses Ganze konstitutiven Zweck erfüllt: etwas "ist" etwas nur im Hinblick auf den Zweck, den es als Komponente in einem größeren Ganzen erfüllt.
- Die Repräsentationen von Objekten als zweckerfüllende Wissensentitäten bilden Zweckvarianten.
- Zweckvarianten können verschiedene Zwecke erfüllen.
- Was denselben Zweck erfüllt, kann gegeneinander ausgetauscht werden.
- Ein Verbund von Zweckvarianten, die denselben Zweck erfüllen, bildet ein Zwecksystem.
- Aggregierbare Zweckvarianten konstituieren sich auf der Basis von beliebig vielen Zwecksystemen. Zweckvarianten ohne zwecksystemische Substruktur existieren in einer Repräsentation nur der je willkürlich festzulegenden Granularität wegen.
- Zweckvarianten unterscheiden sich primär über die Menge der für sie konstitutiven Zwecksysteme. Sonstige Unterschiede werden über das Prinzip der empirisch evozierten Sekundäreigenschaften erfasst. Sie leiten aus primären Zweckvarianten sekundäre ab.
- Zweckvarianten und -systeme werden als gerichteter azyklischer Graph mit regelmäßig wechselnder (Oder-Und-Oder-Und-...)-Interpretation der Kanten repräsentiert, also kurz durch $\vee(\wedge\vee)^*$-Graphen.

- Die Relation zwischen Zwecken und die sie erfüllenden Zweckvarianten heiße is-fulfilled-by. Sie liegt systematisch im Oder-Teil eines $\wedge(\wedge\vee)^*$-Graphen vor. Ein Zwecksystem ist die Menge aller Zweckvarianten, die zu einem Zweck in der Relation is-fulfilled-by stehen.
- Die Relation zwischen Zweckvariante und Zwecksystem heißt is-constituted-by. Sie liegt systematisch im Und-Teil eines $\wedge(\wedge\vee)^*$-Graphen vor. Sprachlich ist dieses insofern etwas ungenau ausgedrückt, als Zweckvarianten sich gerade nicht nur auf der Basis eines einzigen Zwecksystems konstituieren müssen, sondern auf der Basis von mehreren konstituieren können.

Das Prinzip der empirisch evozierten Sekundäreigenschaften:

- Alle anderen empirischen Eigenschaften und Merkmale von Objekten oder Produkten werden als sekundäre Spezifikationen von Zweckvarianten repräsentiert.
- Eine sekundäre Spezifikation einer Zweckvariante besteht aus einer Menge von Eigenschaften, die jeweils zu unterschiedlichen Klassen von Eigenschaften gehören. Eine einzelne, einer bestimmten Klasse zugeordnete Eigenschaft wird als dimensionierte Eigenschaft bezeichnet.
- Mengen von dimensionierten Eigenschaften mit paarweise verschiedenen Dimensionen sind Eigenschaftskonzepte.
- Eigenschaftskonzepte werden zu Taxonomien gebündelt. Diese heißen - der in sie eingebetteten sekundären Spezifikationen wegen - Sekundärtaxonomien. Die primäre Taxonomie einer zwecksystemischen Repräsentation ist der $\vee(\wedge\vee)^*$-Graph. Alle Eigenschaftskonzepte einer Sekundärtaxonomie stehen zu einander in der Ist-Ein-Relation, die über die Teilmengenbildung bzgl. der dimensionierten Eigenschaften der Eigenschaftskonzepte konstituiert wird.
- Sekundäre Eigenschaften gelten für sich genommen als definit empirisch beobachtbar. Kein Objekt einer Domäne wird mithin so repräsentiert, dass es bzgl. derselben Eigenschaftsklasse mehrfach spezifiziert ist: sobald eine konkrete dimensionierte Eigenschaft Teil einer abgeleiteten Beschreibung geworden ist, darf daraus geschlossen werden, dass die anderen Eigenschaften derselben Klasse in diesem Kontext nicht der Fall sind. Dieser Teil des Prinzips bildet die Basis für die Modus Tollens basierte Regelauswertung während einer Aggregation.
- Sekundärtaxonomien gibt es nur bezogen auf Zweckvarianten oder Zwecksysteme. Globale Eigenschaften und Konzepte ohne die Anbindung an eine Zweckvariante oder ein Zwecksystem sind systemisch irrelevant.
- Empirisch evozierte Eigenschaftskonzepte werden initial vom Wissensingenieur vorgegeben. Sie erscheinen als Blätter der zweckvariantenspezifischen Sekundärtaxonomien. Alle anderen empirisch evozierten Eigenschaftskonzepte werden von der $\psi$KEDS-Maschine automatisiert über die Schnittmengenrelation aus bereits existierenden empirisch evozierten Eigenschaftskonzepten abgeleitet und in die zweckvariantenspezifischen Sekundärtaxonomien eingearbeitet. Zwecksystemspezifische Sekundärtaxonomien werden nach demselben Prinzip über alle zweckvariantenspezifischen Sekundärtaxonomien eines Zwecksystems gebildet.
- Empirisch evozierte Eigenschaftskonzepte werden durch einen gerichteten azyklischen Graph repräsentiert. Alle seine Kanten repräsentieren die IS-A-Relation.

Das Prinzip strukturell evozierter Sekundärtaxonomien:

- Werden zwei oder mehr Zweckvarianten eines Zwecksystems durch dieselben Zwecksysteme konstituiert, ohne strukturell gleich zu sein (in diesem Fall haben die entsprechenden Zweckvarianten eine echte nicht leere Teilmenge konstitutiver Zwecksysteme gemeinsam), dann bildet die Menge der konstitutiven Zwecksystemen, die allen gemeinsam sind, die Basis für eine Generalisierung über die entsprechenden Zweckvarianten.
- Strukturell evozierte Konzepte sind Generalisierungen über Zweckvarianten eines Zwecksystems mit partiell gleicher zwecksystemischer Substruktur: sie werden - analog zu den sekundären Spezifikationen von Zweckvarianten - von der $\psi$KEDS-Maschine automatisiert generiert und zu strukturellen Sekundärtaxonomien ausgeformt.
- Strukturelle Sekundärtaxonomien sind an die entsprechenden Zwecksysteme gebunden. Globale strukturelle Sekundärtaxonomien sind systemisch irrelevant.

Das Prinzip zwecksystemischer Kontextregeln:

- Zweckvariante-Zweck-Zweckvariante-Zweck-...-Reihen bilden die aggregationsrelevanten Kontexte: Jeder Pfad in einem $\vee(\wedge\vee)^*$-Graphen, der mit einer Zweckvariante beginnt, aus beliebig vielen Zwecksystem-Zweckvarianten-Teilstücken besteht und abgeschlossen wird mit einem Zwecksystem, einem Zwecksystem-Zweckvarianten-Teilstück, oder einer Eigenschaft bzw. einem Eigenschaftskonzept aus dem letzten Zweckvariante oder -system der vorhergehenden Reihe, bildet einen strukturellen zwecksystemischen Kontext.
- Zwecksystemische Kontexte werden relevant, d. h. sind eingetreten (wahr) oder können nicht mehr eintreten (falsch), sobald bei der Aggregation einer Beschreibung die abgeleitete Wissensentität die je konkrete Struktur einer Zweckvariante-Zweck-Zweckvariante-Zweck-...-Reihe erfüllt oder deren Erfüllung unmöglich geworden ist. So gesehen werden zwecksystemische Kontexte im Zuge der Aggregation zu zwecksystemischen kontextuellen Events, die eintreten oder nicht eintreten.

- Zwecksystemische Kontextregeln sind logische Implikationen mit einer Konjunktion zwecksystemischer Kontexte als Prämisse und genau einem zwecksystemischen Kontext als Konklusion. In der Prämisse werden alle zwecksystemischen Kontexte als Konjunktionen von Einzelaussagen gewertet. In der Konklusion werden der zwecksystemische Kontext und seine je letzte Aussage dagegen als eingebettete Implikation interpretiert.
- Zwecksystemische Kontextregeln existieren auch in Form von zweistelligen relationalen Aussagen mit einem linken und einem rechten zwecksystemischen Kontext: sie erlauben den Test auf Gleichheit, Ungleichheit etc. Erweiterte Versionen der $\psi$KEDS-Maschine können über zwecksystemische Kontextregeln in Form von Funktionen auch Berechnungen in die Aggregation einbringen.
- Zwecksystemische Kontextregeln mit disjunktiv aufgebauten Prämissen oder Konklusionen gibt es nicht.
- Zwecksystemische Kontextregeln mit konjunktiv aufgebauten Konklusionen gibt es nicht.
- Jede zwecksystemische Kontextregel ist jeweils an die eine bestimmte Zweckvariante gebunden, mit der jeder einzelne ihrer Kontexte eröffnet wird: alle zwecksystemischen Kontexte einer jeweiligen Regel beginnen mit derselben Zweckvariante als Einstiegspunkt.

Das Prinzip der kontextsensitiv gesteuerten Aggregation:

- Beschreibungen von Wissensentitäten werden über das Ausmultiplizieren primärer $\vee(\wedge\vee)$*-Graphen und ihrer Sekundärtaxonomien aggregiert.
- Gibt es bei einem Aggregationsschritt mehrere Möglichkeiten, die Beschreibung zu erweitern, wird die Entscheidung darüber an den äußeren Nutzer (oder eine gleichwertige Instanz) weitergereicht.
- Regeln, deren Prämissenkontexte im Zuge vorheriger Aggregationsstufen eingetreten sind, grenzen die aktuelle Erweiterung ein, sofern der Konklusionskontext durch die aktuelle Auswahl eintreffen würde: sie erzwingen dann die Entscheidung für die Konklusion (Modus Ponens).
- Regeln, deren Konklusionskontext im Zuge vorheriger Aggregationsstufen als nicht mehr eintretbar markiert worden sind, grenzen die aktuelle Erweiterung ein, wenn, mit einer Ausnahme, alle anderen Prämissenkontexte bereits eingetreten sind und der letzte noch offene Kontext durch die aktuelle Wahl eintreten würde: in diesem Fall wird die den letzten Kontext eintretende Variante von der Wahl ausgeschlossen (Modus Tollens).
- Gibt es bei einem Aggregationsschritt aufgrund struktureller Vorgaben der Wissensbasis, aufgrund vorhergehender Entscheidungen des äußeren Nutzers oder aufgrund automatisiert erschlossener Begrenzungen nur noch eine Möglichkeit, die Beschreibung zu erweitern, wird diese Erweiterung automatisch ausgeführt.

Konsequenzen:

Zwecksystemische Wissensrepräsentationen sind bei allen Domänen mit aggregativen Objektstrukturen möglich. In diesem Sinne ist die hier entwickelte, darauf aufsetzende zwecksystemische KEDS-Maschine domänenunabhängig.

Die einheitliche Repräsentationsstruktur und die einheitliche Aggregation von Beschreibungen in der $\psi$KEDS-Maschine macht es möglich, denselben Repräsentationsprozess zur Erstellung von zwecksystemisch orientierten Wissensbasen domänenübergreifend zu verwenden.

Die Verwendung von sekundären Spezifikationen und die darin eingehenden empirisch evozierten Eigenschaften erlaubt es der $\psi$KEDS-Maschine mit der automatisierten Bildung von Sekundärtaxonomien auch wesentliche Teile der Repräsentationsarbeit an sich zu übernehmen und eine inkrementelle Pflege der Wissensbasen zu unterstützen. Für den Wissensingenieur reduziert sich die Repräsentationsarbeit hier auf die Zuordnung der entsprechenden Namen. Die hier skizzierte Vereinfachung gilt mutatis mutandis für die strukturell evozierten Sekundärtaxonomien. Zudem wird der Resourcenbedarf damit auf das empirisch Notwendige begrenzt. Speicherbedarf und Performanz hängen nicht mehr vom Umfang der Beschreibungssprache ab, sondern von den empirischen Gegebenheiten der Domäne.

Die einheitliche Repräsentationsstruktur und die einheitliche Aggregation von Beschreibungen in der $\psi$KEDS-Maschine ermöglicht es ihr, sich ihren Nutzern gegenüber auch bei unterschiedlichen Domänen einheitlich darzustellen. Das Erscheinungsbild vor Nutzer folgt immer der Struktur des zwecksystemischen Aggregationsdiskurs. Darüber hinaus kann es frei konfiguriert werden. Andererseits kann der Aggregationsdiskurs vor Nutzer, wo gewollt, auch domänenunabhängig gestaltet und in einer dann übergreifend verwertbaren Interaktionskomponente realisiert werden.

Die Verwendung zwecksystemischer Kontextregeln, die an bestimmte Zweckvarianten gebunden sind, erlaubt es, diese Regeln während der Aggregation im deklarativen Sinne positiv (vorwärts) und negativ (rückwärts) auszuwerten. Damit verhält sich eine zwecksystemische KEDS-Maschine innen so, wie es der äußere Nutzer natürlicherweise von ihr erwartet. Künstliche, weil über den Ableitungsprozess simulierte Negationen per "Cut & Fail" können so umgangen werden.

Die Arbeit mit zwecksystemischen Kontextregeln, die an bestimmte Zweckvarianten gebunden sind, bietet zugleich die Möglichkeit, immer nur die Regeln maschinell zu berücksichtigen bzw. zu verwalten, die im jeweiligen Aggregationsschritt relevant sind. Die Performanz der ψKEDS-Maschine aus Sicht des Nutzers hängt nicht von der Anzahl der Regeln der Wissensbasis ab.

Mit der Verwendung einer Aggregation als Ausmultiplikation von $\wedge(\wedge\vee)^*$-Graphen und bei gleichzeitiger Ausgrenzung möglicher Varianten über die Auswertung der relevanten zwecksystemischen Kontextregeln erreicht die ψKEDS- Maschine eine Ausdrucksstärke, die über Typ-2-Grammatiken hinausgeht, ohne sich zugleich bestimmte Probleme der Prädikatenlogik erster Stufe einzufangen.

Erläuterungen:

Zwecksystemische Wissensbasen:

Der zwecksystemische Primärgraph:

Primär stützt sich eine zwecksystemische Repräsentation auf $\vee(\wedge\vee)^*$-Graphen. Sie enthalten:

- Zwecke, hier dargestellt als Label von in ellipsoiden Knoten.

- Zwecksystemen, hier dargestellt als ellipsoider gelabelter Knoten.

- Zweckvarianten, hier dargestellt als gelabelte orthogonale Knoten mit durchgehender Umrandung:

  - Zweckvarianten, deren Substruktur aus Granularitätsgründen nicht genauer spezifizierbar ist, bilden die Blätter des $\vee(\wedge\vee)^*$-Graphen. Ihre Namen erscheinen als fettes unterstrichenes Knotenlabel.
  - Namen von Zweckvarianten mit zwecksystemischer Substruktur erscheinen als normales Knotenlabel.

- is-fulfilled-by-Relationen, dargestellt durch gestrichelte Kanten.

- is-constituted-by-Relationen, dargestellt durch durchgezogene Kanten.

- Zwecksystemmarkanten, realisiert durch geschlängelte Linien, die die is-constituted-by-Relationen eines Zwecksystems miteinander verbinden.

- is-fulfilled-by-Multiplikatoren, dargestellt durch Kreise innerhalb der is-constituted-by-Relationen: die Zahl gibt an, wie viele Instanzen des Zwecksystems an der Konstitution der Zweckvariante beteiligt sind.

- Platzhalter für Sekundärtaxonomien, dargestellt als kleine Dreiecke.

- strukturell evozierte Generalisierungen über Zweckvarianten, dargestellt als orthogonale Knoten mit gepunkteter Umrandung und Anbindung.

- rein informelle Generalisierungen, dargestellt als kursiv gesetzte Labels mit gepunkteter Anbindung.

- unbekannte Alternativen, dargestellt durch orthogonale Knoten mit ?-Label.

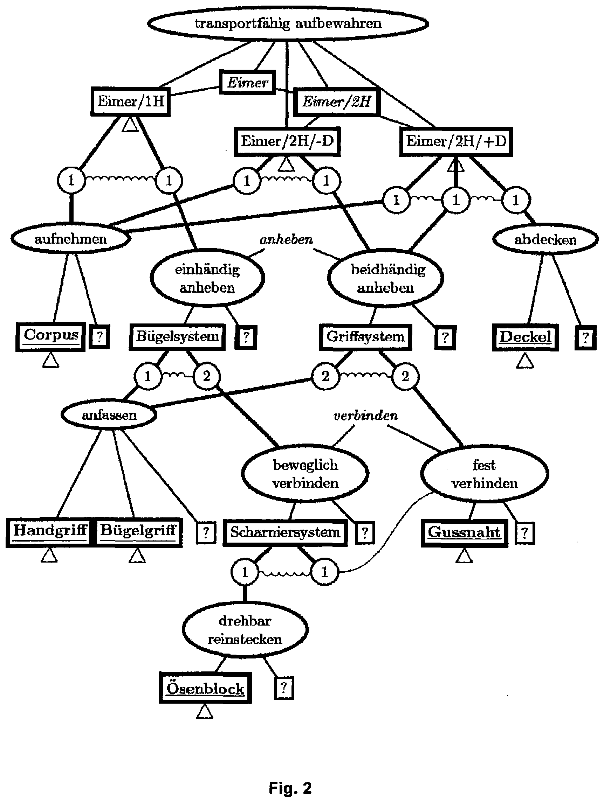

Für eine Domäne, in der es Eimer mit und ohne Deckel gäbe, die mit einem Bügelgriff zum einhändigen Anheben oder mit einem Griffpaar zum beidhändigen Anheben versehen wären, sähe die zwecksystemische Repräsentation durch einen $\vee(\wedge\vee)^*$-Graph wie in Figur 2 dargestellt aus. Man erkennt in diesem Beispiel einer Primärtaxonomie sofort, dass bei reinem Ausmultiplizieren der Kombinationen und Varianten "abweichende" Eimer entstünden: so wäre die Konstruktion von Zweihand-Eimern mit 2 Bügelgriffen aggregierbar. Solche Abweichungen werden über passende zwecksystemische Kontextregeln ausgegrenzt.

Die entsprechende Repräsentation in der ψKEDS-Maschine würde durch passende Datentypen umgesetzt; die Repräsentation in der aktivierbaren Wissensbasis durch korrespondierende XML-Strukturen.

Zwecksystemische Sekundärtaxonomien:

Sekundärtaxonomien, im $\vee(\wedge\vee)^*$-Graphen noch in geschlossener Form markiert durch kleine Dreiecke, enthalten in entfalteter Form:

- direkt empirisch evozierte Eigenschaftskonzepte, von Wissenschaftsingenieuren vorgegeben und dargestellt als orthogonale Knoten mit durchgehendem Rahmen.

- indirekt empirisch evozierte Eigenschaftskonzepte, von der ψKEDS-Maschine automatisch abgeleitet und dargestellt als orthogonale Knoten mit gepunktetem Rahmen.

- IS-A Relationen, dargestellt als gepunktete gerichtete Kante.

Als Knoten enthalten die empirisch evozierten Eigenschaftskonzepte im Label den Konzeptnamen oder die Liste der je konstitutiven Eigenschaften.

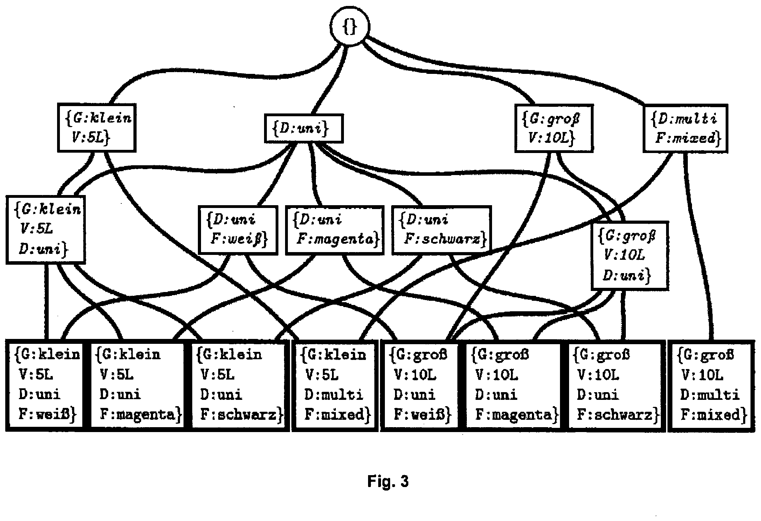

Für eine Domäne, in der es 5 1- und 10 1-Eimer gäbe (sprachlich referenziert als kleine und große Eimer), deren Korpus und Deckel jeweils schwarz, magenta oder weiß sein mögen und von der Größe zueinander passen, und in der man von einfarbigen und bunten Eimern spräche, je nachdem ob Korpus und Deckel dieselbe Farbe haben oder nicht, sähe die zwecksystemische Repräsentation als Sekundärtaxonomie aus, wie in Figur 3 dargestellt.
Das Besondere der Sekundärtaxonomien zwecksystemischer Repräsentationen ergibt sich aus dem Prinzip der empirisch evozierten Sekundäreigenschaften: die ψKEDS-Maschine kann die empirisch relevanten Konzepten iterativ per paarweiser Schnittmengenbildung über die dimensionierten Eigenschaften aus den empirisch evozierten Eigenschaftskonzepten ableiten:

- Zuerst werden die vom Wissensingenieur deklarativ vorgegebenen empirisch evozierten Konzepte erster Ordnung paarweise verglichen und die nicht leeren Schnittmengen der dimensionierten Eigenschaften eines jeden Paares als empirisch evozierte Konzepte zweiter Ordnung erfasst.
- Danach werden die empirisch evozierten Konzepte zweiter bis n-ter Ordnung auf dieselbe Weise behandelt, und zwar solange, bis keine paarweisen Vergleiche neu gebildeter Konzepte mehr möglich sind.
- Schließlich wird der ganze Konzeptverbund entsprechend der Teilmengenrelation geordnet.

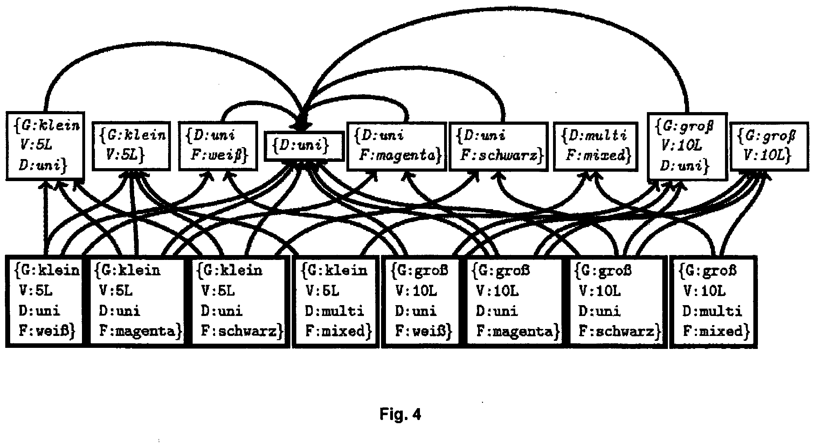

So entstünde über die Schnittmengenrelation in dem hier vorgestellten Beispiel zuerst ein in Figur 4 dargestelltes Ableitungsnetz ehe daraus über die Ausrichtung anhand der Teilmengenrelation die oben erwähnte Sekundärtaxonomie würde. Für sich genommen erlauben solche Sekundärtaxonomien IS-A-Aussagen etwa derart, dass alles, was ein kleiner einfarbiger 5 1-Eimer ist, auch ein kleiner 5 1-Liter ist, nicht aber umgekehrt. In einer ψKEDS-Maschine werden empirisch evozierte Konzepte einer Sekundärtaxonomie jedoch dazu verwendet, über ihre Einbettung in zwecksystemische Kontexte die kontextsensitive Ableitung per zwecksystemischen Regeln zu etablieren.

Neben ihrer automatischen Generierbarkeit hat die Nutzung zwecksystemischer Sekundärtaxonomien weitere angenehme Konsequenzen, und zwar aus Sicht der Wissensrepräsentation als Verfahren und aus Sicht einer zu implementierenden zwecksystemischen KEDS-Maschine:

- Unter der Voraussetzung, dass die vom Wissenschaftsingenieur vorgegeben empirisch motivierten Eigenschaftskonzepte empirisch maximal relevant, weil je paarweise extensional verschiedenen sind, kann leicht gezeigt werden, dass auch alle anderen empirisch motivierten Eigenschaftskonzepte einer zwecksystemischen Sekundärtaxonomie im gleichen Sinne empirisch maximal relevant sind. Verbunden mit der automatischen Generierung entbindet die ψKEDS-Maschine den Wissensingenieur also von Aufgabe, selbst ideale, weil domänenadäquate Taxonomien zu entwerfen.
- Zwecksystemische Sekundärtaxonomien sind in dieser Konstellation immer auch verdichtete Graphen: Knoten mit nur einem Vater kommen nicht vor. Das bedeutet dann, dass die Menge der aus den empirisch evozierten Konzepten erster Ordnung ableitbaren Konzepte nicht mehr von der Genauigkeit des Beobachtungsapparates, also vom Umfang der Beschreibungssprache, abhängt, sondern nur von den empirischen Gegebenheiten der zu repräsentierenden Domänen. So gibt es im vorgestellten Beispiel nur das Konzept "kleiner 5 1-Eimer". Die Verwendung der übergeordneten Konzepte "5 1-Eimer" oder "kleiner Eimer" wäre redundant, weil extensional nicht zu begründen. Damit ist sichergestellt, dass ψKEDS-Maschinen repräsentationstechnisch gesehen nur den wirklich notwendigen Aufwand betreiben, was sich positiv auf ihre Performanz und ihren Resourcenbedarf auswirkt.

Insgesamt geht mit der Verwendung von zwecksystemischen Sekundärtaxonomien also auch ein neues Verfahren zur Generierung und Darstellung empirisch optimaler Taxonomien einher. Mit dieser Konzentration auf zwecksystemische Sekundärtaxonomien soll nicht grundsätzlich ausgeschlossen werden, dass eine ψKEDS-Maschine aus Performanz- oder Usabilitygründen den Zugriff auf die initialen empirisch evozierten Konzepte über die einzelnen "nicht konzeptuellen" dimensionierten Eigenschaften zulässt.

Zur Repräsentation von Kontextregeln:

Zwecksystemische Regeln sind logisch kombinierte zwecksystemische Kontexte. Derartige Kontexte bilden insofern auch Events, als sie im Laufe einer Aggregation definitiv eintreten oder nicht eintreten, mithin wahr oder falsch werden. So gesehen bestehen zwecksystemische Regeln aus zwecksystemischen kontextuellen Events.

Strukturell ausgedrückt sind zwecksystemische kontextuelle Events Pfade des zwecksystemischen Primärgraphen, die optional um empirisch evozierte Konzepte jener Sekundärtaxonomien erweitert werden können, die dem je letzten Zwecksystem oder der letzten Zweckvariante des Pfads entstammen. Allerdings wird diesen Pfaden als zwecksystemischen kontextuellen Events eine innere Struktur unterlegt: sie bestehen immer aus dem eigentlichen Eventkontext (ec), und einem Eventfaktum (ef). Das Eventfaktum bildet dabei syntaktisch gesprochen das jeweils letzte Element eines Pfads.

Bezogen auf die erläuternde Eimerdomäne wären folgende Strukturen zwecksystemische kontextuelle Events:

cel:- <ec([])⊗ ef(pv('Eimer/1H'))>:= wird unter der Interpretation von ⊗ als logische Konjunktion (^) im Rahmen einer Aggregation kontextuell wahr, wenn der durch die aggregierte Wissensentität beschriebene Eimer mit einer Hand hochgehoben werden kann. Der Eventkontext in einem zwecksystemischen Kontext kann durchaus auch leer sein.

ce2:- <ec(pv('Eimer/1H')) ⊗ ef(eec('Eimer/1H',' D:uni,F:weiß'))>:= wird unter der Interpretation von ⊗ als logische Konjunktion (^) im Rahmen einer Aggregation kontextuell wahr, wenn der durch die aggregierte Wissensentität beschriebene Eimer einfarbig weiß ist.

ce3:- <ec(pv('Eimer/1H')) ⊗ ef(icb('Eimer/1H', 'einhändig anheben'))>:= wird unter der Interpretation von ⊗ als logische Konjunktion (^) im Rahmen einer Aggregation kontextuell wahr, wenn der durch die aggregierte Wissensentität beschriebene Eimer auf der Basis von etwas konstituiert wird, das in ihm den Zweck erfüllte, das einhändige Anheben zu ermöglichen.

ce4:- <ec(pv('Eimer/1H')/icb('Eimer/1H', 'einhändig anheben')) ⊗ ef(ifb('einhändig anheben', 'Bügelsystem'))>:= wird unter der Interpretation von ⊗ als logische Konjunktion (^) im Rahmen einer Aggregation kontextuell wahr, wenn das, was in dem durch die aggregierte Wissensentität beschriebenen Eimer den konstitutiven Zweck erfüllt, das einhändige Anheben zu ermöglichen, ein Bügelsystem ist.

ce5:- <ec([]) ⊗ ef(pv('Bügelsystem'))>:= wird unter der Interpretation von ⊗ als logische Konjunktion (^) im Rahmen einer Aggregation kontextuell in jeder aggregierten Wissensentität wahr, das sich auf der Basis irgendeines Zweckes konstituiert, der durch das Bügelsystem erfüllt wird.

ce6:- <ec(pv('Bügelsystem')/icb('Bügelsystem', 'anfassen')) ⊗ ef(ifb('anfassen', 'Bügelgriff'))>:= wird unter der Interpretation von ⊗ als logische Konjunktion (^) im Rahmen einer Aggregation kontextuell wahr, wenn das, was in durch die aggregierte Wissensentität beschriebenen Bügelsystem den konstitutiven Zweck erfüllt, ein Anfassen zu ermöglichen, ein Bügelgriff ist.

ce7:- <ec(pv('Eimer/1H')/icb('Eimer/1H', 'einhändig anheben')/ifb('einhändig anheben', 'Bügelsystem') ⊗ ef(eec( 'Bügelsystem', 'F:weiß'))>:= wird unter der Interpretation von ⊗ als logische Konjunktion (^) im Rahmen einer Aggregation kontextuell wahr, wenn das, was in der durch die aggregierte Wissensentität beschriebenen Eimer den konstitutiven Zweck erfüllt, das einhändige Anheben zu ermöglichen, ein Bügelsystem ist, das weiß ist

Auf der Basis solcher zwecksystemischen kontextuellen Events werden dann die zwecksystemischen Kontextregeln formuliert, und zwar als logische Implikationen:

- Ihre Prämisse besteht immer aus einer Konjunktion zwecksystemischer kontextueller Events, deren jeweiliger Eventkontext und jeweiliges Eventfaktum ihrerseits auch konjunktiv verknüpft sind.
- Ihre Konklusion besteht aus genau einem zwecksystemischen kontextuellen Event, das seinerseits als Implikation gedeutet wird: dessen Eventkontext bildet die Prämisse dieser eingebetteten Implikation, sein Eventfaktum ihre Konklusion.
- Alle zwecksystemischen kontextuellen Events einer solchen Implikation müssen außerdem mit derselben Zweckvariante beginnen, also graphentheoretisch gesprochen mit demselben Vaterknoten beginnen. Ein abstraktes Beispiel mit start-zweck-variante ($ec_1$) ... = start-zweck-variante ($ec_m$) = start-zweck-variante ($ec_n$) sähe mithin so aus:

$$<(ec_1 \wedge ef_1) \wedge \ldots \wedge (ec_m \wedge ef_m) \rightarrow (ec_n \rightarrow ef_n)>$$

Diese Regelform und ihre Bedeutung innerhalb einer zwecksystemischen Repräsentation erlaubt es dann, sie hinsichtlich der im Laufe einer Aggregation getroffenen positiven Entscheidungen (Modus Ponens) und negativen Entscheidungen (Modus Tollens) auszuwerten:

Modus Ponens: Wenn alle zwecksystemischen kontextuellen Events der Prämisse eingetreten sind, darf entweder der Eventkontext der Konklusion nicht eintreten, oder es muss auch das Eventfaktum der Konklusion eintreten, so dass es mithin von der Maschine automatisch erschlossen und in die zu aggregierende Beschreibung eingetragen werden darf.

Modus Tollens: Wenn der Eventkontext der Konklusion eingetreten und das Eventfaktum der Konklusion nicht eingetreten ist, und wenn bereits n-1 zwecksystemische kontextuelle Events der Prämisse eingetreten sind, dann muss das Eintreten des n-ten zwecksystemischen kontextuellen Events aus der Prämisse maschinell unterbunden werden (Modus Tollens) .

Verfeinerte $\psi$KEDS-Maschinen werden auch Regeln mit negierten Eventfakten zulassen, also solche mit optionalen Negationszeichen vor dem Eventfaktum:

$$<(ec_1 \wedge [\neg]\ ef_1) \wedge \ldots \wedge (ec_m \wedge [\neg]\ ef_m) \rightarrow (ec_n \rightarrow [\neg]\ ef_n)>$$

Ermöglicht wird diese echte Negation über die definitorische Tatsache, dass kein Element hinsichtlich derselben Eigenschaftsdimension doppelt spezifiziert sein darf. Ist eine dimensionierte Eigenschaft mithin festgestellt bzw. empirisch gegeben, sind andere Werte derselben Dimension ausgeschlossen. Darf eine dimensionierte Eigenschaft im Zuge der Aggregation nicht mehr eintreten, kann ihr Wert mithin automatisch aus dem Entscheidungsraum entfernt und das negierte Eventfaktum als eingetreten angesetzt werden.

Durch das Einsetzen der zwecksystemischen kontextuellen Events in solchen zwecksystemischen kontextuellen Regeln gewinnt man dann Bedingungen, die im Zuge der Aggregation maschinell berücksichtigt werden. In die Umgangssprache übertragene Beispiele dafür wären etwa:

- Wenn es sich um einen Eimer handelt, der mit einer Hand hochhebbar sein soll, dann muss das Bügelsystem, das das einhändige Anheben ermöglicht, einen Bügelgriff zum Anfassen enthalten (=Einhand-Bügelsystem-Regel).
- Wenn es sich um einen einfarbig weißen Eimer handelt, der mit einer Hand hochhebbar sein soll, dann muss der zum Aufbewahren gedachte Korpus weiß sein (=Einhand-UniWeiß-Korpus-Regel).
- Wenn es sich um einen einfarbig schwarzen Eimer handelt, der mit einer Hand hochhebbar sein soll, dann muss der zum Aufbewahren gedachte Korpus schwarz sein (=Einhand-UniSchwarz-Korpus-Regel).
- Wenn es sich um einen einfarbig weißen Eimer handelt, der mit zwei Händen hochhebbar sein und einen Deckel haben soll, dann muss der zum Aufbewahren gedachte Korpus weiß sein.
- Wenn es sich um einen einfarbig weißen Eimer handelt, der mit zwei Händen hochhebbar sein und einen Deckel haben soll, dann muss der zum Aufbewahren gedachte Deckel weiß sein.

Die Aggregation einer nutzerspezifischen Produktbeschreibung:
Insgesamt arbeiten in einer zwecksystemischen KEDS-Maschine Inferenzkomponente, Anfragekomponente und Interaktionskomponente so zusammen, wie im Folgenden skizziert:

- Die Interaktionskomponente initialisiert im Verbund mit der Anfragekomponente den Aggregationsdialog. Als Ergebnis erhält die Anfragekomponente einen $\wedge(\wedge\vee)$*-Graphen samt möglicher Entscheidungsfelder. Grad der Tiefe und der Sekundärspezifikation im Graphen sind konfigurativ variabel.

- Die Anfragekomponente legt dem Nutzer über die Interaktionskomponente das erste Entscheidungsfeld vor - hier die Entscheidung, ob es ein Eimer für den einhändigen oder für den beidhändigen Gebrauch sein soll. Die Interaktionskomponente nimmt seine Entscheidung für einen Eimer zwecks einhändigem Gebrauch entgegen und sendet das Ergebnis im Verbund mit der Anfragekomponente an die Inferenzkomponente.

- Die Inferenzkomponente

- vermerkt das Aggregationsziel.
- legt alle Regeln, die an der Zweckvariante Eimer/1H hängen, als potentiell relevant auf den Regelstack, insbesondere die Einhand-UniWeiß-Korpus-Regel, die Einhand-UniSchwarz-Korpus-Regel und die Einhand-Bügelsystem-Regel
- liefert die Sekundärtaxonomie der Zweckvariante Eimer/1H als nächstes Entscheidungsfeld an die Anfragekomponente zurück.

- Die Anfragekomponente lässt die Sekundärtaxonomie in geeigneter Form über die Interaktionskomponente darstellen und den Nutzer einen Pfad daraus auswählen. Sie erhält die Eigenschaften eines Blattkonzepts zurück und sendet das Ergebnis, es solle sich um einen kleinen einfarbigen weißen 5 1-Eimer handeln, im zwecksystemischen Format an die Inferenzmaschine weiter.

- Die Inferenzkomponente

  - versetzt alle Einhand-UniWeiß-Regeln in den MP-Status, insbesondere die Einhand-UniWeiß-Korpus-Regel.
  - nimmt alle anderen Einhand-UniFarbe-Regeln vom Stack - insbesondere die Einhand-UniSchwarz-Korpus-Regel: denn aus einer falschen Prämisse ergeben sich keine weiteren Konsequenzen.
  - sucht all jene für den Eimer/1H konstitutiven Zwecksysteme heraus, für die nur (noch) je eine Zweckvariante möglich ist und fügt diese als automatisch ermittelte Komponenten in die zu aggregierende Beschreibung ein, in diesem Fall die Zweckvarianten Korpus und Bügelsystem.
  - geht erneut den Regelstack durch und überführt alle Regeln in den Status "feuern", die sich bereits im MP-Status oder MT-Status befinden und deren Eventkontext mit dem Eintragen des Korpus als Komponente der zu aggregierenden Beschreibung eingetreten sind, hier wäre das nur die Einhand-UniWeiß-Korpus-Regel.
  - wertet alle Regeln im Zustand "feuern" aus und trägt die so erzwungenen Eigenschaften in die aggregierte Beschreibung als Eigenschaft der Komponente ein (MP) bzw. nimmt die so "verbotenen" Eigenschaften aus den aggregationsspezifischen Sekundärtaxonomien heraus (MT). Wenn bei einer Ausgrenzung die letzte Möglichkeit ausgeschlossen worden ist, ist ein Spezifikationskonflikt entstanden. In diesem Fall liefert die Interaktionsmaschine alle Regeln, die (rekursiv) an der Begrenzung beteiligt waren, als nächstes Entscheidungsfeld zurück: Anfragekomponente und Interaktionskomponente müssen den Nutzer entscheiden lassen, welche seiner Entscheidungen er zurücknehmen möchte.
  - /* In gleichem Sinne verfährt die Maschine jetzt mit dem Bügelsystem, der Einhand-Bügelsystem-Regel, den hier nicht erwähnten Größenregeln und Farbregeln für den Bügelgriff etc. etc. */
  - Nach Aggregation aller automatisch zu ermittelnden Spezifikationen gibt die Inferenzkomponente die so mehr oder minder komplettierte Beschreibung samt des nächsten zu bearbeitenden Entscheidungsfelds an die Anfragekomponente zurück. In diesem Fall müsste noch entschieden werden, ob die zu aggregierende Beschreibung einen großen 10 1-Eimer oder einen kleinen 5 1-Eimer betreffen soll.
  - Die Anfragekomponente konvertiert die erhaltene, aggregierte (Teil)Beschreibung in ein präsentationsgemäßes Format und reicht dieses zusammen mit dem nächsten geeigneten konvertierten Entscheidungsfeld an die Interaktionskomponente.
  - Die Interaktionskomponente präsentiert das Ergebnis und lässt sich die nächste Rückfrage beantworten.

Übergreifendes Verfahren zur zwecksystemischen Wissenserfassung:
Zwecksystemische Wissensrepräsentationen sind, wie erwähnt, bei allen Domänen mit aggregativen Objektstrukturen möglich. Und all diese zwecksystemischen Repräsentationen können über ψKEDS-Maschinen zur automatisierten Aggregation von domänenadäquaten Objektbeschreibungen herangezogen werden, die dann ihrerseits als Pläne, Anleitungen oder Maßgaben für nachgelagerte, mehr oder minder automatisierte Produktions- oder Verarbeitungsprozesse verwertbar sind.

Daraus ergibt sich, dass auch das Erfassen des Wissens als solches, will sagen: seine Überführung in eine zwecksystemische Wissensrepräsentation domänenunabhängig und einheitlich organisiert werden kann. Ein solches Verfahren zur domänenunabhängigen zwecksystemischen Wissensrepräsentation entspräche, ausgelegt auf eine ψKEDS-Maschine, dem folgenden Arbeitsfahrplan eines zwecksystemisch orientierten Wissensingenieurs:

init()

1. Liste die unmittelbar wahrnehmbaren, zu repräsentierenden Objekte der Domäne auf.

2. Lege ein leeres Zwecksystem als initiale Version des repräsentierenden zwecksystemischen Primärgraphen an.

3. Führe für alle zu repräsentierenden Objekte $OBJ_1$ bis $OBJ_n$ bzgl. des initialen Zwecksystems ZST und des zwecksystemischen Primärgraphens ZPG jeweils den Arbeitsschritt $doRepresent(ZPG, ZS_T, OBJ_i)$ aus (Rekursionsanfang).

$doRepresent\ (ZPG, ZS_{in}, OBJ_{in})$

1. Suche in ZPG nach einer verglichen mit dem vorgegebenen Objekt $OBJ_{in}$ strukturgleichen, bereits repräsentierten Zweckvariante $ZV_{eq}$:

    a) Liste alle direkten Komponenten des vorgegebenen, zu repräsentierenden Objektes auf, d. h. $dk_{objin1}$ bis $dk_{objinn}$

    b) Bestimme die Zwecke der Komponenten, die sie in für das vorgegebene, zu repräsentierenden Objekt erfüllen, d. h. $z_1(dk_{objin1})$ bis $z_n(dk_{objinn})$.

    c) Suche nach einer schon repräsentierten äquivalenten Zweckvariante $ZV_{eq}$ mit derselben konstitutiven Zweckignatur wie das vorgegebene, zu repräsentierende Objekt. Zu jedem $z_i(dk_{objini})$ muss es ein die strukturgleiche Zweckvariante $ZV_{eq}$ konstituierendes Zwecksystem geben, das sich auf denselben Zweck bezieht und umgekehrt.

    d) Wenn Du aus Granularitätsgründen entscheidest, das gegebene Objekt $OBJ_{in}$ strukturell nicht genauer zu repräsontieren, musst Du per Expertenwissen ermitteln, ob es, aus welchen Gründen auch immer, trotzdem als Instanz einer schon existierenden substrukturlosen Zweckvariante, d. h. ein bereits existierendes Blatt in dem zwecksystemischen Primärgraphen, gelten soll oder ob es sich um eine ganz neue Objektart handelt.

2. Falls es noch keine solche (struktur)gleiche Zweckvariante gibt,

    a) Lege eine neue Zweckvariante $ZV_{eq}$ an.

    b) Für alle bereits ermittelten $OBJ_{in}$-Komponenten $dk_{objin}$ bis $dk_{objinn}$ und deren für das zu repräsentierende Objekt $OBJ_{in}$ konstitutiven Zwecke:

    - Versuche in ZPG ein schon repräsentiertes korrespondierendes Zwecksystem $ZS_{ci}$ zu finden (zwecks $ZS_{ci} = z_i(dk_{objini})$).
    - Falls dieses Zwecksystem $ZS_{ci}$ noch nicht existiert, lege es an.
    - Setze das gefundene oder erzeugte Zwecksystem $ZS_{ci}$, das den Zweck der aktuell bearbeitenden Objektkomponente $dk_{objini}$ repräsentiert, als konstitutives Zwecksystem der neu angelegten Zweckvariante $ZV_{eq}$ ein. Diese wird so im Laufe dieses Durchgangs zu einer zwecksystemischen strukturellen Repräsentation des zu repräsentierenden Objekts $OBJ_{in}$.

3. Für alle für die gefundene oder erzeugte Zweckvariante $ZV_{eq}$ konstitutiven Zwecksysteme $ZS_{eq}$ bis $ZSe_{qn}$ (Abbruchbedingung der Rekursion: keine zwecksystemische Struktur):

    - Finde im gegebenen Objekt $OBJ_{in}$ diejenige Komponente $dk_{objin}$, die den Zweck des konstitutiven Zwecksystems $ZS_{eq}$ erfüllt.
    - Repräsentiere die Komponente $dk_{objin}$ als Variante des kontitutiven Zwecksystems $ZS_{eq}$. Tu dies, indem du Rekursionsschritt

$doRepresent\ (ZPG, ZS_{eq}, dk_{objini})$
ausführst.

4. Setze die gefundene oder angelegte Zweckvariante $ZV_{eq}$, die nun das gegebene, zu repräsentierende Objekt $OBJ_{in}$ repräsentiert, als Variante des gegebenen Zwecksystems $ZS_{in}$ ein.

5. Bestimme Eigenschaften des zu repräsentierenden Objekts $OBJ_{in}$ und lasse die $\psi$KEDS-Maschine die Sekundärtaxonomie der Zweckvariante $ZV_{eq}$ über das entsprechende empirisch evozierte Konzept $\{df_1, ..., df_m\}$ automatisiert erweitern.

doRestrict (ZPG, ZS$_{in}$)

- Sichte alle Zweckvarianten des zwecksystemischen Primärgraphens und entferne in all jenen Varianten die Verknüpfung mit dem initialen Zwecksystem, die noch andere, feinere Zwecke erfüllen.
- Begrenze bei allen Zweckvarianten die rein kombinatorisch abzuleitenden Beschreibungen auf die empirisch adäquaten durch Einführung von zwecksystemischen Kontexten und darauf aufbauenden Regeln. Nutze dazu empirische Domänenregeln. Überprüfe deren Relevanz jedoch anhand des Kriteriums, ob die kombinatorische Ausmultiplikation des zwecksystemischen Primärgraphens samt nachgeschalteter Anwendung der schon formulierten, begrenzenden Regeln noch domäneninadäquate Objekte ableiten würde und also weiterer begrenzender Regeln bedürfte.

Übergreifendes Verfahren zur Aggregation von Produktbeschreibungen:
Die Interaktionskomponente der ψKEDS-Maschine kann verschieden gestaltet werden und ihrerseits den User-Input unterschiedlich erheben. Sie darf mithin domänenspezifisch ausgeformt sein. Gleichwohl wird die ψKEDS-Maschine selbst dadurch ihre Domänenunabhängigkeit nicht verlieren. Denn unabhängig vom domänenspezifischen Erscheinungsbild der Interaktionskomponente wird sie immer auch die Struktur des zwecksystemischen Aggregationsdialog berücksichtigen: Gefragt nach einer adäquaten Beschreibung, die vorgegebene Entscheidungen berücksichtigt, liefert die Inferenzkomponente die mehr oder minder vollständig aggregierte Objektbeschreibung samt des nächsten Entscheidungsfelds zurück. Entsprechend wird die Interaktionskomponente den Nutzer entscheiden lassen, bevor sie die Inferenzkomponente im Verbund mit der Anfragekomponente erneut nach der nächsten, weiter ausgearbeiteten Version einer Beschreibung fragt.

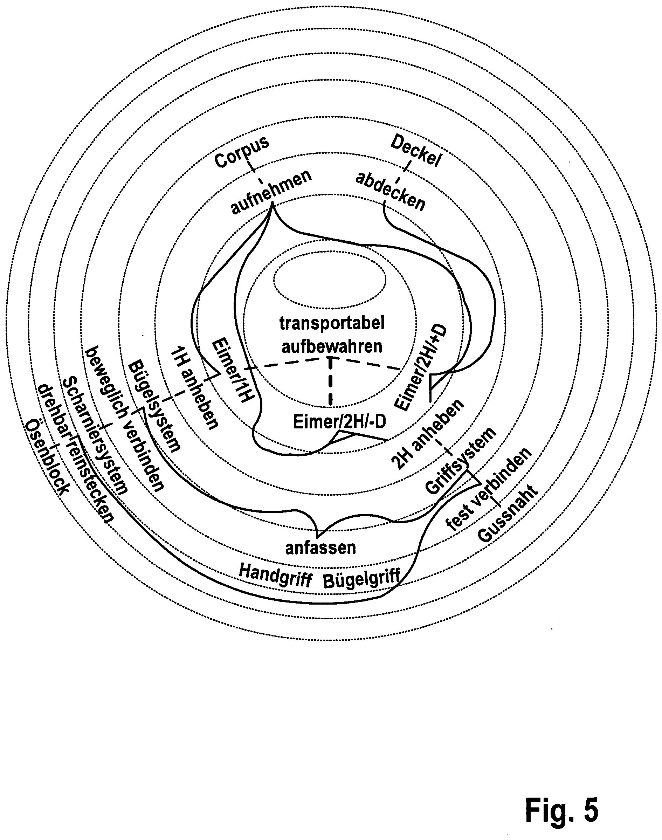

Zusätzlich möge noch ein zweites, gewissermaßen umgekehrt arbeitendes, domänenübergreifend verwendbares Verfahren zur dialogischen Aggregation konzipiert werden. Es manifestiert sich als ein genereller ψKEDS-Interactor, also als ein für alle ψKEDS-fähigen Domänen einheitliches, visuell-haptisches Verfahren zur dialogischen Aggregation personalisierter Produktspezifikationen:
Initial fordert die Interaktionskomponente hier von der Inferenzkomponente den kompletten $\wedge(\wedge\vee)$*-Graphen an und stellt diesen auf ihrem interaktiven Medium dar. Zwecksystemische Label, Knoten, Kanten, Namen aus der Wissensbasis können zuvor konfigurativ auf Bilder, Texte, Farben, Schriften etc. festgelegt werden. Ebenso konfigurativ spezifizierbar ist, ob der $\vee(\wedge\vee)$*-Graph top-down-, left-right-, right-left-, bottom-up-orientiert dargestellt oder frei arrangiert wird. Eine noch andere Form für den generellen ψKEDS-Interactor wäre die zweidimensionale Darstellung (Kreis) einer dreidimensionalen Abbildung des $\vee(\wedge\vee)$*-Graphen auf einer Kugel, wie in Figur 5 dargestellt.

Des Weiteren enthält der generelle ψKEDS-Interactor einen Bereich, in den der Nutzer unter Rückgriff auf die für seine Interaktionskomponente spezifischen IO-Geräte Knoten aus dem präsentierten Graphen hineinschieben kann. Dieses Hineinschieben in den Entscheidungsbereich, hier dargestellt als eine Ellipse, wird systemisch als Entscheidung für eine Variante gewertet.

Berührt der Nutzer eine Zweckvariante oder ein Zwecksystem des zwecksystemischen $\vee(\wedge\vee)$*-Graphens ohne sie zu verschieben, fordert die Interaktionskomponente im Verbund mit der Anfragekomponente den aktuellen Stand der entsprechenden Sekundärtaxonomie von der Inferenzkomponente an.

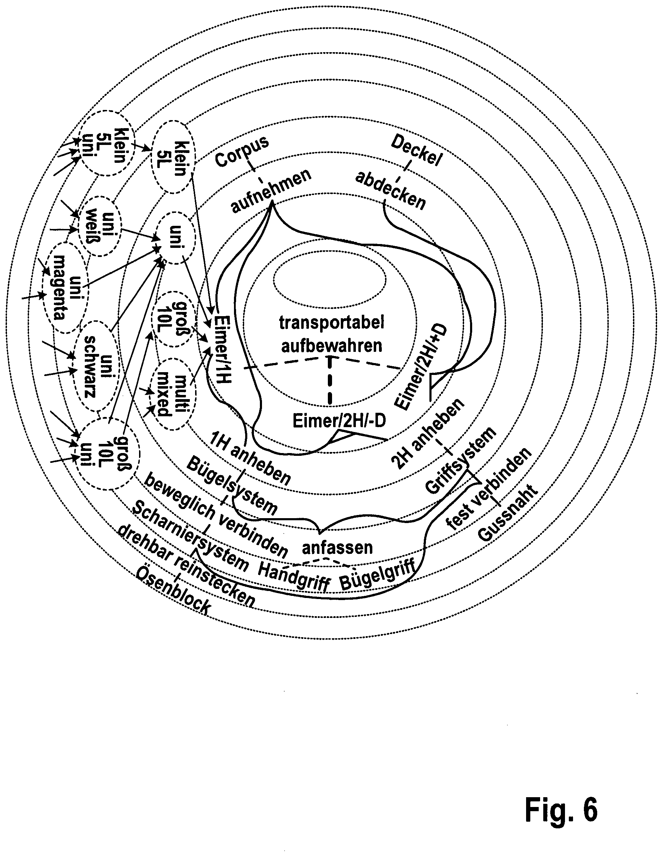

Nach Eingang der Sekundärtaxonomie verdichtet, verschiebt und/oder verkleinert der generelle ψKEDS-Interactor die vorhandene Darstellung so, dass sie um die Sekundärtaxonomie erweitert werden kann, wie dies in Figur 6 dargestellt ist.

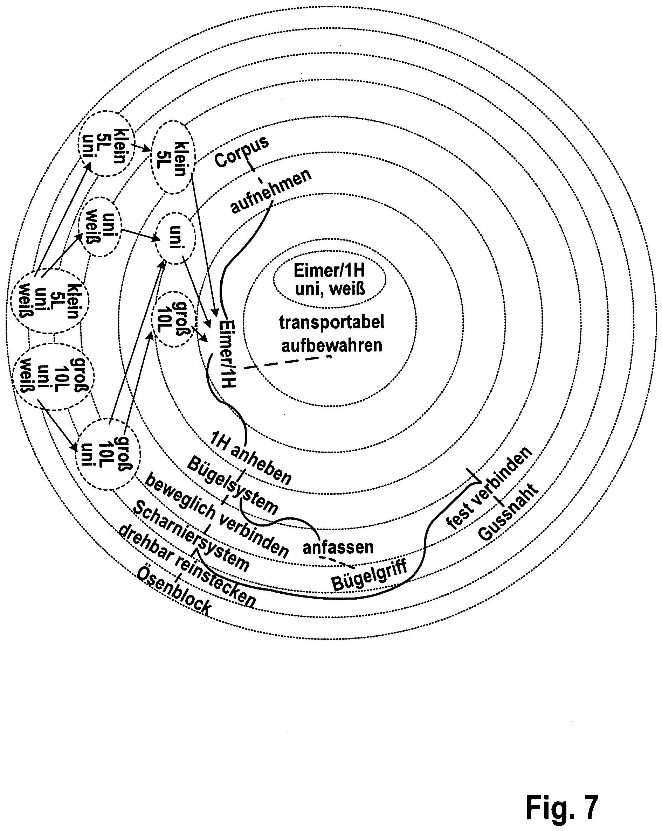

Schiebt der Nutzer dann eines der Elemente aus der Sekundärtaxonomie (oder der zwecksystemischen Primärtaxonomie) in den Entscheidungsraum, lässt die Interaktionskomponente im Verbund mit der Anfragekomponente die Konsequenzen von der Inferenzkomponente berechnen. Nach Abschluss der Deduktion präsentieren Abfrage- und Interaktionskomponente aber nicht direkt den Zwischenstand der zu aggregierenden Objektbeschreibung, die sie als Antwort erhalten haben. Vielmehr fordern sie zunächst noch den aktualisierten Stand des $\vee(\wedge\vee)$*-Graphen und den zuletzt gezeigten Sekundärtaxonomien von der Inferenzkomponente an. Diese liefert daraufhin die Strukturen zurück, aus denen die aufgrund der getroffenen Entscheidungen nicht mehr möglichen Varianten entfernt worden sind. Und erst diese Resultate präsentiert die Interaktionskomponente jetzt als Antwort auf die vom User zuletzt getroffene Entscheidung. Hätte sich ein Nutzer in dem hier dargestellten Beispiel für einen weißen, einfarbigen Eimer entschieden, der mit einer Hand zu tragen sein soll, würde ihm der generelle ψKEDS-Interactor mutatis mutandis die in Figur 7 gezeigte entsprechend ausgedünnte Graphik präsentieren.

In diesem Beispiel könnte und müsste sich der Nutzer noch weiter für eine bestimmte Größe des Eimers entscheiden, in dem er wiederum einen Knoten aus der Sekundärtaxonomie in das Entscheidungsfeld schöbe. Am Ende erhielte er eine aggregierte, weil nun voll ausspezifizierte Beschreibung des gewünschten Objekts, die mit dem komplett ausgedünnten Primärgraphen und Sekundärtaxonomien zusammenfiele.

Der generelle ψKEDS-Interactor geht damit über die bisher dargestellte, rein dialogische Form der ψKEDS-Maschine hinaus:

Dort stellte die ψKEDS-Maschine jeweils die nächste zu beantwortende Frage und lieferte zudem nur den gerade erreichten Stand der aggregierten Beschreibung. Hier liefert die ψKEDS-Maschine sukzessive verdichtete $\vee(\wedge\vee)^*$-Graphen und Sekundärtaxonomien, und zwar solange, bis der initiale Graph in die zu aggregierende Beschreibung des einen Objektes überführt ist. Die von der ψKEDS-Maschine dafür zusätzlich auszuliefernden Informationen entsprechen 1:1 dem Status, die sie intern im Zuge einer Aggregation ohnehin protokollieren muss.

Vorteil dieser Vorgehensweise ist, dass damit auch ein domänenunabhängiges Verfahren zur dialogischen Aggregation von Produktvarianten existiert.

Abgrenzung zum Stand der Technik:

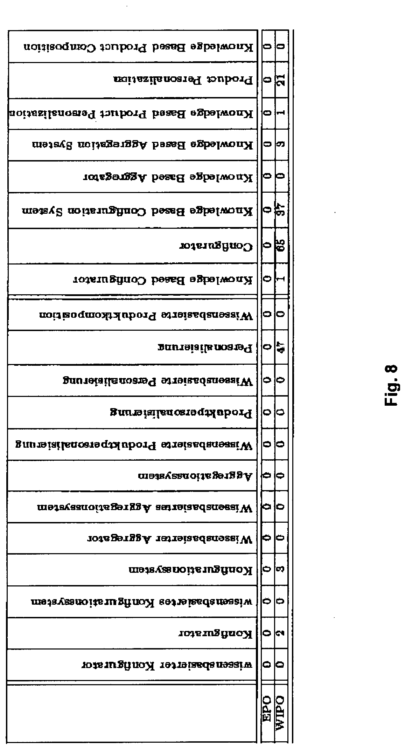

Will man den Stand der Technik ermitteln, wird man, bezogen auf die ψKEDS-Maschine, am ehesten nach bereits spezifizierten wissensbasierten Konfiguratoren, Aggregationssystemen oder Methoden zur wissensbasierten Produktpersonalisierung und -komposition suchen müssen. Die in Figur 8 dargestellte Tabelle stellt einen statistischen Überblick über die entsprechenden Trefferlagen bereit.

In der Tat gibt es eine Reihe von Patenten, die von der Stichwortlage her eine ähnliche Thematik zu behandeln scheinen, wie die hier vorgestellte zwecksystemische KEDS-Maschine. Bei näherer Betrachtung fallen jedoch fundamentale Unterschiede zwischen jenen Ansätzen und der hier dargestellten erfindungsgemäßen Lösung auf:

So beschäftigen sich manche Patente bzw. Patentanmeldungen mit der Umsetzung schon personalisierter Vorgaben, nicht mit ihrer Erzeugung (WO 2011/140568). Oder der Begriff "Personalisierung" bezieht sich in den Offenlegungsschriften nicht auf den Akt einer logisch und empirisch gestützten wissensbasierten Ableitung, sondern wird rein im Sinne einer Geräte- bzw. Objektausformung oder -kennzeichnung verwendet, bei der die personalisierenden Mittel selbst schon gegeben sind (WO 2011/081780).

Dort, wo es in den Patentschriften um wissensbasierte Aggregation geht, werden darunter auch Neuronale Netze subsumiert (WO 2003/015004), die schon per definitionem einen diametral anderen Ansatz verfolgen, als das Konzept einer expliziten Wissensrepräsentation, wie sie die ψKEDS-Maschine verwendet. Oder es geht in solchen Patentschriften um Datenverknüpfungen ohne logische Evaluation (WO 2003/065240).

Bei den Patentschriften mit Bezug zum Begriff Konfigurationssystem wird gelegentlich die Übertragung einer spezifischen Einstellung aus einer kollektiven Dateneinheit auf das zu konfigurierende Objekt verhandelt (WO 2006/114112), also nicht die dialogische Logik und wissensbasierte Ableitung einer Einzelfallbeschreibung selbst.

Größere Trefferlagen erzeugen die Stichwörter "Knowledge Based Configuration System" und "configurator". Letzterer meint in Patentschriften oft nur die konfigurierende Komponente an sich, ohne dass es überhaupt um eine wissensbasierte Ableitung ihres Inputs ginge (WO 2012/065815). Oder es wird auf eine fallbasierte Ableitung referenziert (WO 2011/046976). In sehr seltenen Fällen betrifft das Neue in einer Patentschrift sogar den Ausschluss eines Konfigurators (WO 2004/077292).

Zudem geht es auch da, wo Dokumente als Treffer für den Begriff "Knowledge Based Configuration System" angeboten werden, in sehr vielen Fällen um die bloße Konfiguration von physischen oder logischen Komponenten, und zwar hinsichtlich der Übertragung, der Nutzung und der Auswirkung der im wesentlichen bereits vorliegenden Konfigurationsinformationen (WO 2011/153225) und gerade nicht, wie bei der ψKEDS-Maschine, um die Repräsentation und die dialogisch wunschgemäße, logisch-wissensbasierte Deduktion solcher Informationen in und aus einem KI-System.

Ferner wird in diesem Zusammenhang gelegentlich die pro Wissensdomäne spezifisch vereinheitlichte Konfiguration verhandelt, nicht die domänenübergreifende Repräsentation und Erzeugung von Beschreibungen (WO 2011/056087).

Oder es geht um Maschinen und Verfahren, die nicht die wissensbasierte Komposition als Aufgabe betreffen, sondern andere, wie etwa Diagnose, Fehlerermittlung, Parameterabbildung, maschinelles Lernen etc. (WO 2008/083281). Und schließlich gibt es Spezifikationen, die nur lose kleinere Aspekte des hier vorgestellten Systems betreffen (WO 2007/089234) und von daher nicht zentral zum Stand der Technik zur Lösung der Aufgabe gehören, die die ψKEDS-Maschine zu lösen verspricht.

Neben diesen Offenlegungsschriften, die mit der hier vorgestellten Erfindung nur in einem sehr weit gefassten Sinne etwas gemeinsam haben, gibt es einige Patentschriften, die den Stand der Technik im Hinblick auf die Aufgabe der ψKEDS-Maschine enger markieren:

So wird u.a. ein Kleidungskonfigurator vorgestellt, bei dem die gewünschte Version zunächst aus Rohprodukten zusammengesetzt und für jedes dieser Rohprodukte dann Produktänderungs-Varianten angeboten werden (WO 2003/014859). Was diese Erfindung jedoch nicht nutzt, ist eine Repräsentation des Wissens um die Kleiderdomäne mit aggregierbaren Komponenten, ihren empirischen Eigenschaften und insbesondere die dazu nötigen kontextsensitiven Regeln. Konsequenterweise wird auch die Ableitung des Erlaubten mit Mitteln der KI nicht angesprochen. Insgesamt wird so gerade kein Verfahren entwickelt, mit dem man etwa die Einteilung in die empirisch adäquaten Produktgruppen, allgemein auch für gänzlich heterogene Domänen erstellen könnte. Eine mehr oder minder große Generalisierung dieses Verfahrens wird allerdings in der Schrift "Method to generate a customizable product configurator" entworfen, bei der nicht von Rohprodukten die Rede ist, sondern von "product classes": der "customizable product configurator" selbst wird dabei geleitet aus einer "object-orientated class hierarchy by a relational set of customizable and component classes (e.g.

products and services)" (WO 2003/021393). Damit gilt auch hier, dass die Mittel der KI im zentralen Sinne eben nicht verwendet werden und mithin auch kein daran anknüpfendes generelles Repräsentationsverfahren angeboten wird. Gleiches gilt sinngemäß dort, wo mit einem Datenbank induzierter "frame-based knowledge tree" (WO 2005/066840) bzw. mit einem "frame-based inference" System gearbeitet wird, selbst wenn dieses durch regelbasierte Elemente erweitert werden dürfte (WO 2006/054992): die Vererbung vom Allgemeinen zum Besonderen bietet nicht von sich aus ein generell übertragbares Verfahren zur Wissenserfassung. Eine moderne Version ähnlichen Zuschnitts und ähnlicher Begrenzungen wäre das Verfahren "for providing a building options configurator" (WO 2011/109268): trotz aller Aktualität in Sachen CAD wird gerade kein domänenübergreifendes Verfahren zur Wissensrepräsentation und Ableitung/Konfiguration beschrieben.

Die Verwendung von Mitteln der KI in einem Konfigurator wird dagegen explizit von einer anderen deutschen Offenlegungsschrift erwähnt, die den nächstliegenden Stand der Technik darstellt, die initial auf das Konfigurieren von mechanischen, elektrischen oder hydraulischen Antriebssträngen zielt und dann dadurch ins Allgemeine gewendet wird, dass bei dieser Art von Konfiguratoren generell Komponenten und nutzerspezifische Daten über "das Produkt modellierende logische Regeln", "Algorithmen" oder "künstliche Intelligenz Modelle" verknüpft werden (WO 2002/067151). Allerdings wird in dieser Patentschrift die Abbildung der Wirklichkeit in die Repräsentation, d. h. in die Modelle oder Methoden der KI, völlig unbestimmt gelassen und nur prinzipiell erwähnt. Außer der Aussage, dass KI Methoden verwendet werden können, wird deren Nutzung letztlich nicht genauer spezifiziert. Damit bleibt auch die wirtschaftlicherseits entscheidende Aufgabe ungelöst: Wissensingenieure müssen zur Erstellung von Konfiguratoren auf diesem Stand der Technik kostenträchtig bei jeder Domäne neu "von 0 an" anfangen, den je richtigen Set der KI-Techniken und der angemessenen Module zu bestimmen, die empirisch adäquate Form der Regeln zu definieren und die domänenspezifische Form der Komponentenbeschreibung zusammenzustellen. Mithin werden bei diesem Ansatz auch kein allgemeines domänenübergreifendes Repräsentationsverfahren und keine systematisch wiederverwertbaren Einheiten spezifiziert.

Im gleichen Sinne erwähnen auch die Beschreibung einer "personalisierten interaktiven Netzarchitektur" bzw. die eines "Verfahrens zur automatischen Aktualisierung von Funktionalitäten in einem Netzwerk" nur, dass ein "knowledge management system" und ein "knowledge management repository" beteiligt sind bzw. dass ein "wissensbasiertes Planungswerkzeug" verwendet wird (WO 2006/066880, WO 2006/066881)). Wie genau dieses ausgeformt ist, d. h. wie die Repräsentation des Wissens im Sinne eines Verfahrens erfolgt, wird nicht angegeben und muss für jede Instanz und jeden neuen Domänenbezug von Grund auf neu "designed" werden. Dieses Offenlassen der Ausformung des wissensbasierten Anteils und damit seine "Delegierung" an den konkreten Einzelfall, ohne das Generalisierungspotential und seine methodischen, maschinellen und verfahrenstechnischen Synergien zu heben, ist bei weiteren Patentschriften zu konstatieren (WO 2006/085320):
So wird auch in der spezifischen Offenlegungsschrift zur kontextuellen Nutzung von Ontologien zur Personalisierung von "Mobile Devices" letztlich nur erwähnt, dass Ontologien und Regelsysteme verwendet werden (WO 2006/006028). Wie sie für (andere) Domänen (neu) aufgebaut werden, bleibt letztlich offen und also im konkreten Fall den dafür zuständigen Wissensingenieuren überlassen. Domänenübergreifende Verfahren werden auch hier nicht beschrieben. Dieser eigentliche ausstehende Schritt zur Generalisierung und Wiederverwertbarkeit zwecks Kostenreduzierung wird schließlich auch von einer sehr neuen Offenlegungsschrift noch nicht in den Stand der Technik eingebracht: Sie folgt zwar durchaus dem groben Modell von Fakten, Regeln und Deduktion, kommt aber ebenfalls über das bloße "dass" nicht hinaus und stellt damit ebenso Form, Inhalt und Erfassungsweg nach wie vor in das Belieben der Wissensingenieure und verfehlt damit den Weg zur domänenübergreifenden Wiederverwertbarkeit (WO 2011/073996).

Zuletzt sei noch auf eine Offenlegungsschrift bzgl. eines Konfigurators verwiesen, die unter dem Titel "a generalized concurrent configurator for constructing a cooperative complex system" sehr viel genauer erläutert, welche KI-Techniken in die dialogische Ableitung einfließen und das System als solches im zentralen Sinne prägen, nämlich der "two level bi-partite graph". Dieser offeriert zwei Arten der Knoten und die sie verbindenden Kanten, so dass ein "view of the configuration problem" entsteht, das dadurch als ein Netzwerk von "items" und "resources" samt damit verknüpfter "constraint expressions" charakterisiert wird. Grundansatz ist dabei, dass jedes komplexe Konfigurationsproblem angeblich interpretiert werden kann "in terms of components that supply and/or consume capabilities of other components" (WO 1996/002882). Was bei diesem schon älteren Ansatz trotz aller genaueren Spezifikation wiederum offen bleibt, ist das Verfahren, wie die Abbildung des Wissens um eine konkrete Domäne auf dieses Lösungspattern erfolgt. Auch Umsetzung dieser Abbildung bleibt hier mithin den Wissensingenieuren jeweils pro neuer Domäne neu anheim gestellt: die Wissensrepräsentation als Verfahren ist nicht generalisiert.

Zweck der Maschine und der mit ihr verbundenen Verfahren ist es, den Wissensrepräsentationsprozess, die Struktur der kontextsensitiven Ableitung von Wissensentitäten und die Interaktion mit dem auswählenden Kunden so weit unabhängig vom je konkreten Wissensgebiet also domänenübergreifend zu vereinheitlichen, dass der Aufwand zur Repräsentation von Domänenwissen trotz aller Heterogenität der Domänen minimiert und die Interaktion zur Ableitung der einzelnen, personalisierten Produkte, Objekte oder Wissensentitäten trotz aller Verschiedenheit der Domänen wiederverwertbar gemacht wird, und zwar ohne für diese Synergien domänenverfälschende Vereinfachungen in Kauf nehmen zu müssen.

Im Generellen wird die Aufgabe durch die Ausrichtung aller Komponenten der ψKEDS-Maschine und aller damit verbundenen Verfahren auf das generelle Prinzip einer zwecksystemischen Repräsentation gelöst. Im Speziellen bringen damit mindestens die folgenden vier Innovationen Neues in den bisherigen Stand der Technik ein:

- Domänenunabhängige, weil zwecksystemisch operierende, wissensbasierte Maschine zur automatisierten Aggregation domänenadäquater kundenspezifischer personalisierter Produkt- und Objektbeschreibungen.
- Verfahren zur Generierung und Darstellung empirisch optimaler Taxonomien.
- Verfahren zur domänenunabhängigen zwecksystemischen Wissensrepräsentation.
- einheitliches, visuell-haptisches Verfahren zur dialogischen Aggregation personalisierter Produktspezifikationen.

Appendix I: Gesamtspezifikation der Eimerdomäne

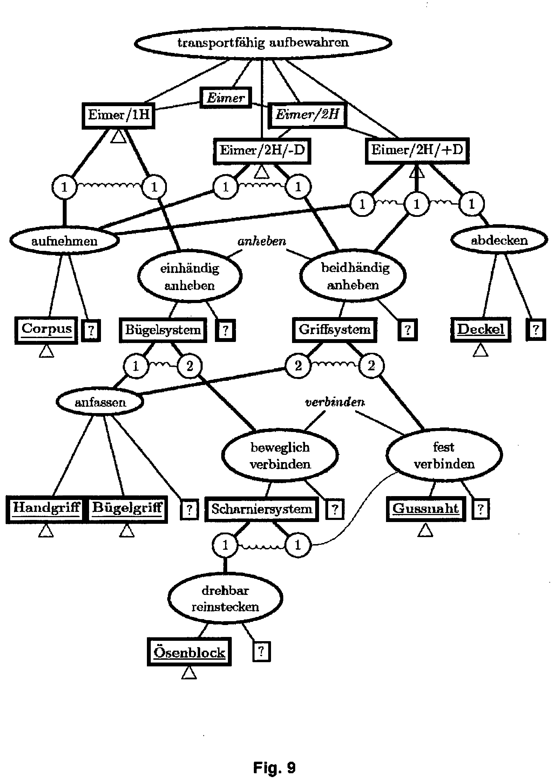

Das Konzept einer zwecksystemischen Repräsentation ist bisher an einer Eimerdomäne erläutert worden. Dort sollte es Eimer mit und ohne Deckel geben, die je mit einem Bügelgriff zum einhändigen Anheben oder mit einem Griffpaar zum beidhändigen Anheben versehen wären, wobei der Bügelgriff die Nutzung eines Deckels verhindern sollte. Für den Eimer als Ganzes ergab sich auf dieser Basis eine zwecksystemische Repräsentation durch den in Figur 9 gezeigten $\vee(\wedge\vee)^*$-Graphen.

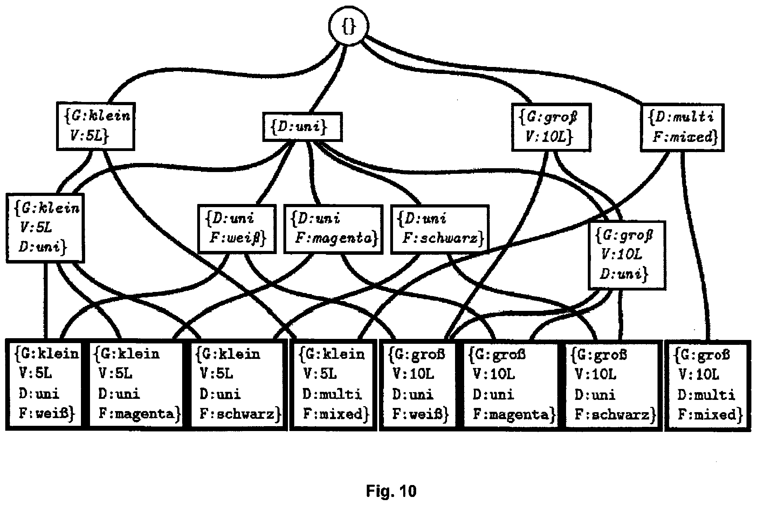

Außerdem sollte es diese Eimer als 5 1- und 10 1-Eimer geben (sprachlich referenziert als "kleine" und "große" Eimer), deren Korpus und Deckel jeweils schwarz, magenta oder weiß sein und von der Größe zueinander passen sollten, wobei man von einfarbigen und bunten Eimern spräche, je nachdem, ob Korpus und Deckel dieselbe Farbe haben oder nicht. Für alle Eimer als Ganzes ergab sich so die in Figur 10 gezeigte Sekundärtaxonomie.

Selbstverständlich lassen sich nicht nur für die Eimer als solche, sondern auch für deren zweckerfüllende Komponenten und ihre jeweiligen Eigenschaften entsprechende Sekundärtaxonomien zusammenstellen.

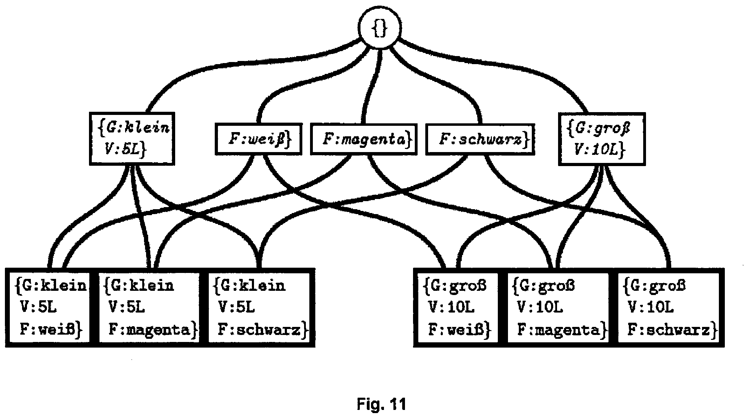

Für den Korpus, der nicht nur Farbe und prinzipielle Größe des Ganzen mitbestimmt, sondern insbesondere das Fassungsvermögen festlegt, ergäbe sich die in Figur 11 gezeigte eigenschaftsbezogene Sekundärtaxonomie.

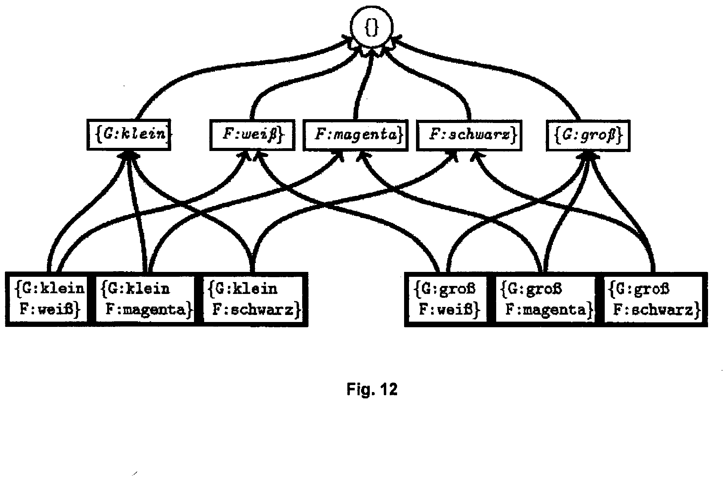

Alle anderen Komponenten, also sind dann nur noch jeweils hinsichtlich ihrer Größe und ihrer Farbe bestimmt. Für sie ergäbe sich also immer die gleiche eigenschaftsbezogene Sekundärtaxonomie, wie in Figur 12 gezeigt.

Zuletzt bliebe noch zu erwähnen, dass über den Zweckvarianten eines Zwecksystems natürlich auch eine übergreifende eigenschaftsbezogene Sekundärtaxonomie erstellt werden könnte. Dabei würden alle direkt empirisch evozierten Eigenschaftskonzepte aller Zweckvarianten zu einer Menge zusammengefasst und darüber nach demselben Prinzip diese übergreifende eigenschaftsbezogene Sekundärtaxonomie erstellt. Im vorliegenden Fall allerdings fiele diese generelle Sekundärtaxonomie eines Zwecksystems mit denen eines jeden Eimers zusammen, und zwar schlicht deshalb, weil alle drei Zweckvarianten mit den gleichen sekundären Eigenschaften existieren.

**Patentansprüche**

1. System zur automatisierten Aggregation von Beschreibungen individueller Objektvarianten, mit einer zwecksystemischen Interaktionskomponente, einer zwecksystemischen Anfragekomponente und einer auf eine zwecksystemische Interaktion ausgerichteten zwecksystemischen Inferenzkomponente, wobei die jeweiligen Komponenten in mindestens ein Computernetzwerk eingebunden sind und wobei die zwecksystemische Interaktionskomponente zur Darstellung von durch die zwecksystemische Anfrage- und die zwecksystemische Inferenzkomponente bearbeiteten Daten sowie zum Empfang und zur Weiterleitung von Nutzereingaben konfiguriert ist, und wobei die zwecksystemische Anfragekomponente konfiguriert ist, mittels der zwecksystemischen Interaktionskomponente empfangene Nutzereingaben an die zwecksystemische Inferenzkomponente in einem zwecksystemischen Kommunikationsformat weiterzuleiten, und wobei die zwecksystemische Inferenzkomponente dazu konfiguriert ist, mindestens folgende Aufgaben auszuführen:

   Nutzereingaben von der zwecksystemischen Anfragekomponente in dem zwecksystemischen Kommunikationsformat entgegenzunehmen sowie bei einer Bereitstellung von Informationen mit initialem Charakter durch die zwecksystemische Anfragekomponente eine entsprechende zwecksystemische Wissensbasis als Bezugsrahmen zu aktivieren und als Reaktion auf von der zwecksystemischen Anfragekomponente übermittelte Daten ein mit den Daten verbundenes Ergebnis in die entsprechende zwecksystemische Wissensbasis einzuordnen sowie alle mit dieser zwecksystemischen Wissensbasis verbundenen Regeln zu aktivieren und im Folgenden über eine logische Auswertung der bereits aktivierten Regeln einen jeweiligen Entscheidungsbereich einzugrenzen, wobei dabei automatisiert gewonnene Entscheidungskonsequenzen für einen iterativen Prozess auf Basis der vorangegangenen Schritte zu verwenden sind,

sowie ein mittels des iterativen Prozess gewonnenes Ergebnis an die zwecksystemische Anfragekomponente weiterzuleiten,

und wobei das an die zwecksystemische Anfragekomponente übermittelte Ergebnis von der zwecksystemischen Anfragekomponente an die zwecksystemische Interaktionskomponente weiterzuleiten ist und von dieser auf einer Anzeigevorrichtung darzustellen ist, charakterisiert darin, dass Zweckvarianten und -systeme durchgehend als gerichteter azyklischer Graph mit regelmäßig wechselnder (Oder-Und-Oder-Und-...)-Interpretation der Kanten repräsentiert sind.

**2.** System nach Anspruch 1, mit einer kooperierenden Maschine zur Ermittlung empirisch relevanter Generalisierungen in Form von Begriffen.

**3.** System nach Anspruch 2, mit einer dömänenübergreifenden Dialogkomponente zur Aggregation von Produktbeschreibungen.

**4.** Verfahren zur Aggregation von Beschreibungen individueller Objektvarianten, bei dem mindestens eine zwecksystemische Interaktionskomponente, eine zwecksystemische Anfragekomponente und eine auf eine zwecksystemische Repräsentation ausgerichtete zwecksystemische Inferenzkomponente in ein Computernetzwerk eingebunden werden und bei dem die zwecksystemische Interaktionskomponente zur Darstellung von durch die zwecksystemische Anfrage- und die zwecksystemische Inferenzkomponente bearbeiteten Daten sowie zum Empfang und zur Weiterleitung von Nutzereingaben verwendet wird, wobei die zwecksystemische Anfragekomponente verwen-det wird, um mittels der zwecksystemischen Interaktionskomponente empfangene Nutzereingaben an die zwecksystemische Inferenzkomponente in einem zwecksystemischen Kommunikationsformat weiterzuleiten, und wobei die zwecksystemische Inferenzkomponente dazu verwendet wird, mindestens folgende Aufgaben auszuführen:

Nutzereingaben von der zwecksystemischen Anfragekomponente in dem zwecksystemischen Kommunikationsformat entgegenzunehmen sowie bei einer Bereitstellung von Informationen mit initialem Charakter durch die zwecksystemische Anfragekomponente eine entsprechende zwecksystemische Wissensbasis als Bezugsrahmen zu aktivieren und als Reaktion auf von der zwecksystemischen Anfragekomponente übermittelte Daten ein mit den Daten verbundenes Ergebnis in die entsprechende zwecksystemische Wissensbasis einzuordnen sowie alle mit dieser zwecksystemischen Wissensbasis verbundenen Regeln zu aktivieren und im Folgenden über eine logische Auswertung der bereits aktivierten Regeln einen jeweiligen Entscheidungsbereich einzugrenzen, wobei dabei automatisiert gewonnene Entscheidungskonsequenzen für einen iterativen Prozess auf Basis der vorangegangenen Schritte verwendet werden, sowie ein mittels des iterativen Prozess gewonnenes Ergebnis an die zwecksystemische Anfragekomponente weiterzuleiten,

wobei das an die zwecksystemische Anfragekomponente übermittelte Ergebnis von der zwecksystemischen Anfragekomponente an die zwecksystemische Interaktionskomponente weitergeleitet wird und von dieser auf einer Anzeigevorrichtung dargestellt wird, charakterisiert darin, dass Zweckvarianten und -systeme durchgehend als gerichteter azyklischer Graph mit regelmäßig wechselnder (Oder-Und-Oder-Und-...)-Interpretation der Kanten repräsentiert sind.

**5.** Zwecksystemische Interaktionskomponente zur Verwendung in einem System nach Anspruch 1, die als in ein Netz eingebundene, rückkanalfähige Darstellungsmaschine ausgebildet ist und dazu ausgelegt ist, von nachgeschalteten Komponenten empfangene Listen oder Graphen zu präsentieren,

einen speziellen Bereich für Entscheidungsoptionen bereitzustellen, eine Entscheidung eines Nutzers entgegenzunehmen und an nachgelagerte Verarbeitungsstufen weiterzureichen.

**6.** Zwecksystemische Interaktionskomponente nach Anspruch 5, die dazu konfiguriert ist, einen Interactor bereitzustellen, der für ein einheitliches, visuell-haptisches Verfahren zur dialogischen Aggregation personalisierter Produktspezifikationen von der zwecksystemischen Inferenzkomponente einen logischen Graphen anfordert und den Graphen auf einem Interaktionsmedium darstellt sowie einen Bereich bereitstellt, in den ein Nutzer, unter Rückgriff auf für die zwecksystemische Interaktionskomponente spezifische IO-Geräte, Knoten aus dem logischen Graphen einfügen kann, wobei für den Fall, dass der Nutzer eine Zweckvariante oder ein Zwecksystem des logischen Graphen ohne diese zu verschieben berührt, die zwecksystemische Interaktionskomponente im Verbund mit der zwecksystemischen Anfragekomponente einen aktuellen Stand einer entsprechenden Sekundärtaxonomie von der zwecksystemischen Inferenzkomponente anfordert.

**7.** Zwecksystemische Anfragekomponente zur Verwendung in einem System nach Anspruch 1, die als ein in einem Netz eingebundener Computer ausgebildet ist und dazu konfiguriert ist, Entscheidungen in einem von der zweck-

systemischen Interaktionskomponente vorgegebenen Format entgegenzunehmen, in ein zwecksystemisches Kommunikationsformat zu übersetzen und entsprechende Resultate an die zwecksystemische Inferenzkomponente weiterzureichen.

**8.** Zwecksystemische Inferenzkomponente zur Verwendung in einem System nach Anspruch 1, die als ein in einem Netz eingebundener Computer ausgebildet ist und dazu konfiguriert ist, Nutzereingaben von der zwecksystemischen Anfragekomponente entgegenzunehmen sowie bei einer Bereitstellung von Informationen mit initialem Charakter durch die zwecksystemische Anfragekomponente eine entsprechende zwecksystemische Wissensbasis in dem zwecksystemischen Format als Bezugsrahmen zu aktivieren und als Reaktion auf von der zwecksystemischen Anfragekomponente übermittelte Daten ein mit den Daten verbundenes Ergebnis in die entsprechende zwecksystemische Wissensbasis iterativ einzuordnen sowie alle mit dieser zwecksystemischen Wissensbasis verbundenen Regeln in dem zwecksystemischen Format zu aktivieren und im Folgenden über eine logische Auswertung der bereits aktivierten Regeln einen jeweiligen Entscheidungsbereich einzugrenzen, wobei dabei automatisiert gewonnene Entscheidungskonsequenzen für einen iterativen Prozess auf Basis der vorangegangenen Schritte zu verwenden sind, sowie ein mittels des iterativen Prozess gewonnenes Ergebnis in dem zwecksystemischen Kommunikationsformat an die zwecksystemische Anfragekomponente weiterzuleiten.

**Claims**

**1.** A system for automated aggregation of descriptions of individual object variants with a dedicated systemic interaction component, a dedicated systemic query component and a dedicated systemic inference component oriented toward dedicated systemic interaction, wherein the various components are integrated into at least one computer network and wherein the dedicated systemic interaction component is configured to present data processed by the dedicated systemic query and dedicated systemic inference components, as well as to receive and forward user inputs, and wherein the dedicated systemic query component is configured to forward user inputs received via the dedicated systemic interaction component to the dedicated systemic inference component in a dedicated systemic communication format, and wherein the dedicated systemic inference component is configured to execute at least the following tasks:

To receive user inputs from the dedicated systemic query component in the dedicated systemic communication format as well as, when information with initial character is supplied via the dedicated systemic query component, to activate a corresponding dedicated systemic knowledge basis as a frame of reference, and, in response to the data conveyed by the dedicated systemic query component, to categorize in the corresponding dedicated systemic knowledge basis a result associated with the data, as well as to activate all rules associated with this dedicated systemic knowledge basis and thereafter to further specify a respective decision region using a logical analysis of the rules already activated, wherein decision consequences obtained in automated fashion are to be used for an iterative process based on the previous steps,
as well as to forward a result obtained via the iterative process to the dedicated systemic query component, and wherein the result conveyed to the dedicated systemic query component is to be forwarded by the dedicated systemic query component to the dedicated systemic interaction component, and is to be displayed on a display device by the dedicated systemic interaction component, **characterized in that** dedicated variants and dedicated systems are consistently represented as a directed acyclic graph with regularly changing (or-and-or- and-...) interpretation of the edges.

**2.** The system according to claim 1 with a cooperating machine for determining empirically-relevant generalizations in the form of terms.

**3.** The system according to claim 2 with a trans-domain dialog component for aggregating product descriptions.

**4.** A method for aggregating descriptions of individual object variants in which at least one dedicated systemic interaction component, one dedicated systemic query component and one dedicated systemic inference component oriented toward dedicated systemic representation are integrated into a computer network and in which the dedicated systemic interaction component is used to represent data processed by the dedicated systemic query and dedicated systemic inference components as well as to receive and forward user inputs, wherein the dedicated systemic query component is used to forward user inputs received via the dedicated systemic interaction component to the dedicated systemic inference component in a dedicated systemic communication format, and wherein the dedicated systemic inference component is used to execute at least the following tasks:

To receive user inputs from the dedicated systemic query component in the dedicated systemic communication format as well as, when information with initial character is supplied via the dedicated systemic query component, to activate a corresponding dedicated systemic knowledge basis as a frame of reference, and, in response to data conveyed by the dedicated systemic query component, to categorize in the corresponding systemic knowledge basis a result associated with the data, as well as to activate all rules associated with this dedicated systemic knowledge basis and thereafter to further specify a respective decision region using a logical analysis of the rules already activated,

wherein the decision consequences obtained in automated fashion are used for an iterative process based on the previous steps, as well as to forward a result obtained via the iterative process to the dedicated systemic query component,

wherein the result conveyed to the dedicated systemic query component is forwarded by the dedicated systemic query component to the dedicated systemic interaction component, and is displayed on a display device by the dedicated systemic interaction component, **characterized in that** dedicated variants and dedicated systems are consistently represented as a directed acyclic graph with regularly changing (or-and-or- and-...) interpretation of the edges.

5. A dedicated systemic interaction component for use in a system according to claim 1 embodied as a feedback-capable display unit integrated into the network and designed to present lists or graphs received from downstream components,

to provide a specialized region for decision options, to receive a user decision and to forward to downstream processing stages.

6. The dedicated systemic interaction component according to claim 5 configured to provide an interactor that requests, for a unitary, visual-haptic process for dialogical aggregation of personalized product specifications, a logical graph from the dedicated systemic inference component and displays the graph on an interactive medium as well as provides a region in which a user who, by accessing specific IO devices for the dedicated systemic interaction component, can insert nodes from the logical graphs, where should the user touch a dedicated variant or a dedicated system of the logical graph without displacing it, the dedicated systemic interaction component, in conjunction with the dedicated systemic query component, requests from the dedicated systemic inference component a current status for a corresponding secondary taxonomy.

7. A dedicated systemic query component for use in a system according to claim 1 that is embodied as a computer integrated into a network and configured to receive decisions in a format specified by the dedicated systemic interaction component, to translate them into a dedicated systemic communication format and to forward corresponding results to the dedicated systemic inference component.

8. A dedicated systemic inference component for use in a system according to claim 1 that is embodied as a computer integrated into a network and configured to receive user inputs from the dedicated systemic query component as well as, if information with initial character is supplied via the dedicated systemic query component, to activate a corresponding dedicated systemic knowledge basis in the dedicated systemic format as a frame of reference, and, in response to the data conveyed by the dedicated systemic query component, to iteratively categorize in the corresponding dedicated systemic knowledge basis a result associated with the data, as well as to activate all rules associated with this dedicated systemic knowledge basis in the dedicated systemic format and thereafter to further specify a respective decision region using a logical analysis of the rules already activated, wherein the decision consequences obtained in automated fashion are to be used for an iterative process based on the previous steps, as well as to forward a result obtained via the iterative process to the dedicated systemic query component in the dedicated systemic communication format.

**Revendications**

1. Système d'agrégation automatisée de descriptions de variantes d'objets individuels doté d'un composant d'interaction systémique dédié, d'un composant d'interrogation systémique dédié et d'un composant d'inférence systémique dédié axé sur l'interaction systémique dédiée, les divers composants étant intégrés dans au moins un réseau informatique et le composant d'interaction systémique dédié étant configuré pour présenter les données traitées par les composants d'interrogation systémique dédié et d'inférence systémique dédié, ainsi que pour recevoir et transmettre les entrées d'utilisateur, et le composant d'interrogation systémique dédié étant configuré pour transmettre au composant d'inférence systémique dédié les entrées d'utilisateur reçues par l'intermédiaire du composant d'interaction systémique dédié sous un format de communication systémique dédié, et le composant d'inférence systémique dédié étant configuré pour exécuter au moins les tâches consistant à :

Recevoir les entrées d'utilisateur du composant d'interrogation systémique dédié sous le format de communication systémique dédié et, lorsque des informations à caractère initial sont fournies par l'intermédiaire du composant d'interrogation systémique dédié, activer une base de connaissances systémique dédiée correspondante comme cadre de référence et, en réponse aux données acheminées par le composant d'interrogation systémique dédié, classer dans la base de connaissances systémique dédiée correspondante un résultat associé aux données, ainsi qu'activer toutes les règles associées à cette base de connaissances systémique dédiée et ensuite mieux préciser une région de décision respective à l'aide d'une analyse logique des règles déjà activées, les conséquences de décision obtenues de façon automatisée devant être utilisées pour un processus itératif basé sur les étapes précédentes;

ainsi qu'acheminer au composant d'interrogation systémique dédié un résultat obtenu par l'intermédiaire du processus itératif;

et le résultat acheminé au composant d'interrogation systémique dédié devant être acheminé au composant d'interaction systémique dédié par le composant d'interrogation systémique dédié, et devant être affiché sur un dispositif d'affichage par le composant d'interaction systémique dédié, **caractérisé en ce que** les variantes dédiées et les systèmes dédiés sont constamment représentés en tant que graphe acyclique dirigé dont l'interprétation des bordures change régulièrement (ou-et-ou-et-...).

2. Système selon la revendication 1 doté d'une machine coopérante pour déterminer les généralisations empiriquement pertinentes sous forme de termes.

3. Système selon la revendication 2 doté d'un composant de dialogue trans-domaine pour agréger les descriptions de produits.

4. Procédé pour agréger les descriptions de variantes d'objets individuels selon lequel au moins un composant d'interaction systémique dédié, un composant d'interrogation systémique dédié et un composant d'inférence systémique dédié axé sur la représentation systémique dédiée sont intégrés dans un réseau informatique et dans lequel le composant d'interaction systémique dédié est utilisé pour représenter les données traitées par les composants d'interrogation systémique dédié et d'inférence systémique dédié ainsi que pour recevoir et transmettre les entrées d'utilisateur, le composant d'interrogation systémique dédié étant utilisé pour transmettre au composant d'inférence systémique dédié les entrées d'utilisateur reçues par l'intermédiaire du composant d'interaction systémique dédié sous un format de communication systémique dédié, et le composant d'inférence systémique dédié étant utilisé pour exécuter au moins les tâches consistant à :

Recevoir les entrées d'utilisateur du composant d'interrogation systémique dédié sous le format de communication systémique dédié et, lorsque des informations à caractère initial sont fournies par l'intermédiaire du composant d'interrogation systémique dédié, activer une base de connaissances systémique dédiée correspondante comme cadre de référence et, en réponse aux données envoyées par le composant d'interrogation systémique dédié, classer dans la base de connaissances systémique dédiée correspondante un résultat associé aux données, ainsi qu'activer toutes les règles associées à cette base de connaissances systémique dédiée et ensuite mieux préciser une région de décision respective à l'aide d'une analyse logique des règles déjà activées, les conséquences de décision obtenues de façon automatisée devant être utilisées pour un processus itératif basé sur les étapes précédentes; et transmettre au composant d'interrogation systémique dédié un résultat obtenu par l'intermédiaire du processus itératif;

le résultat acheminé au composant d'interrogation systémique dédié devant être acheminé par le composant d'interrogation systémique dédié au composant d'interaction systémique dédié, et devant être affiché sur un dispositif d'affichage par le composant d'interaction systémique dédié, **caractérisé en ce que** les variantes dédiées et les systèmes dédiés sont représentés comme graphe acyclique dirigé dont l'interprétation des bordures change régulièrement (ou-et-ou-et-...).

5. Composant d'interaction systémique dédié destiné à être utilisé dans un système selon la revendication 1 réalisée dans une unité d'affichage capable de rétroaction intégrée dans le réseau et conçue pour présenter les listes ou les graphes reçus des composants en aval,

pour fournir à une région spécialisée les options de décision, pour recevoir une décision d'utilisateur et pour les transmettre aux étapes de traitement en aval.

**6.** Composant d'interaction systémique dédié selon la revendication 5 configuré pour fournir un interacteur qui demande, pour un processus visuel-haptique unitaire destiné à l'agrégation dialogique de spécifications de produit personnalisées, un graphe logique du composant d'inférence systémique dédié et affiche le graphe sur un support interactif et fournit une région dans laquelle un utilisateur qui, en accédant à des dispositifs IO spécifiques pour le composant d'interaction systémique dédié, peut insérer des noeuds des graphes logiques, sachant que si l'utilisateur touche une variante dédiée ou un système dédié du graphe logique sans le déplacer, le composant d'interaction systémique dédié, conjointement avec le composant d'interrogation systémique dédié, demande du composant d'inférence systémique dédié un état actuel pour une taxonomie secondaire correspondante.

**7.** Composant d'interrogation systémique dédié destiné à être utilisé dans un système selon la revendication 1 réalisé dans un ordinateur intégré dans un réseau et configuré pour recevoir des décisions sous un format spécifié par le composant d'interaction systémique dédié, pour les traduire dans un format de communication systémique dédié et acheminer des résultats correspondants au composant d'inférence systémique dédié.

**8.** Composant d'inférence systémique dédié destiné à être utilisé dans un système selon la revendication 1 qui est réalisé sous forme d'un ordinateur intégré dans un réseau et configuré pour recevoir des entrées d'utilisateur provenant du composant d'interrogation systémique dédié et, si des informations à caractère initial sont fournies par l'intermédiaire du composant d'interrogation systémique dédié, activer une base de connaissances systémique dédiée correspondante sous le format systémique dédié comme cadre de référence et, en réponse aux données acheminées par le composant d'interrogation systémique dédié, classer itérativement dans la base de connaissances systémique dédiée correspondante un résultat associé aux données, ainsi qu'activer toutes les règles associées à cette base de connaissances systémique dédiée sous le format systémique dédié et ensuite mieux préciser une région de décision respective à l'aide d'une analyse logique des règles déjà activées, les conséquences de décision obtenues de façon automatisée devant être utilisées pour un processus itératif basé sur les étapes précédentes, ainsi qu'acheminer au composant d'interrogation systémique dédié un résultat obtenu par l'intermédiaire du processus itératif sous le format de communication systémique dédié.

**Fig. 1**

**Fig. 2**

Fig. 3

Fig. 4

Fig. 5

Fig. 6

**Fig. 7**

| WIPO | EPO | |
|---|---|---|
| 0 | 0 | wissensbasierter Konfigurator |
| 2 | 0 | Konfigurator |
| 0 | 0 | wissensbasiertes Konfigurationssystem |
| 3 | 0 | Konfigurationssystem |
| 0 | 0 | Wissensbasierter Aggregator |
| 0 | 0 | Wissensbasiertes Aggregationssystem |
| 0 | 0 | Aggregationssystem |
| 0 | 0 | Wissensbasierte Produktpersonalisierung |
| 0 | 0 | Produktpersonalisierung |
| 0 | 0 | Wissensbasierte Personalisierung |
| 47 | 0 | Personalisierung |
| 0 | 0 | Wissensbasierte Produktkomposition |
| 1 | 0 | Knowledge Based Configurator |
| 65 | 0 | Configurator |
| 37 | 0 | Knowledge Based Configuration System |
| 0 | 0 | Knowledge Based Aggregator |
| 3 | 0 | Knowledge Based Aggregation System |
| 1 | 0 | Knowledge Based Product Personalization |
| 21 | 0 | Product Personalization |
| 0 | 0 | Knowledge Based Product Composition |

Fig. 8

**Fig. 9**

**Fig. 10**

EP 2 881 899 B1

Fig. 11

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 1996002882 A
- WO 2011140568 A
- WO 2011081780 A
- WO 2003015004 A
- WO 2003065240 A
- WO 2006114112 A
- WO 2012065815 A
- WO 2011046976 A
- WO 2004077292 A
- WO 2011153225 A
- WO 2011056087 A
- WO 2008083281 A
- WO 2007089234 A
- WO 2003014859 A
- WO 2003021393 A
- WO 2005066840 A
- WO 2006054992 A
- WO 2011109268 A
- WO 2002067151 A
- WO 2006066880 A
- WO 2006066881 A
- WO 2006085320 A
- WO 2006006028 A
- WO 2011073996 A

**In der Beschreibung aufgeführte Nicht-Patentliteratur**

- Artificial Intelligence. **NEGNEVITSKY ; MICHAEL.** A Guide to Intelligent Systems. 2002
- **ZÖLLER-GREER ; PETER ; KÜNSTLICHE INTELLIGENZ ; GRUNDLAGEN ; ANWENDUNGEN.** Mit einer Einführung in die Logik, PROLOG, Expertensysteme, Fuzzy-Systeme. *Neuronale Netze und Genetische Algorithmen,* 2010
- **BRACHMANN ; RONALD ; J. U. HECTOR ; J. LEVESQUE.** *Readings in Knowledge Representation,* 1985
- **NEGNEVITSKY ; MICHAEL.** knowledge engineering. *Artificial Intelligence,* 2011
- **ZÖLLER-GREER.** Künstliche Intelligenz. 2010
- **HARMELEN ; FRANK VAN ; VLADIMIR LIFSCHITZ ; BRUCE PORTER.** Handbook of Knowledge Representation. 2008
- **MEHROTRA, S. C. et al.** *Knowledge Engineering,* 2011
- **STOCK ; WOLFGANG G.** Information Retrieval. *Informationen suchen und finden,* 2007
- **STOCK ; WOLFGANG G. U.** Mechthild Stock: Wissensrepräsentation. *Informationen auswerten und bereitstellen,* 2008
- dem Anwender erlaubt, ohne Kenntnis der im Hintergrund benutzten deskriptiven Sprachen mit dem System zu arbeiten. *Tracekomponente*
- **ZÖLLER-GREER.** *Künstliche Intelligenz,* 2010